(19) Europäisches Patentamt
European Patent Office
Office européen des brevets

(11) EP 3 501 050 B1

(12) **FASCICULE DE BREVET EUROPEEN**

(45) Date de publication et mention de la délivrance du brevet:
**10.06.2020 Bulletin 2020/24**

(21) Numéro de dépôt: **17768175.6**

(22) Date de dépôt: **18.08.2017**

(51) Int Cl.:
*H01M 4/90* (2006.01) *H01M 4/92* (2006.01)
*B01J 32/00* (2006.01) *C08F 12/20* (2006.01)
*C08F 12/30* (2006.01) *C08F 212/14* (2006.01)
*C08K 3/08* (2006.01) *C08K 5/00* (2006.01)
*C08K 5/372* (2006.01)

(86) Numéro de dépôt international:
**PCT/FR2017/052245**

(87) Numéro de publication internationale:
**WO 2018/033688 (22.02.2018 Gazette 2018/08)**

(54) **PROCÉDÉ DE PRÉPARATION DE PARTICULES CONDUCTRICES DE PROTONS, APTES À CATALYSER LA RÉDUCTION DE L'OXYGÈNE OU L'OXYDATION DE L'HYDROGÈNE, PAR GREFFAGE À LEUR SURFACE DE POLYMÈRES FLUORÉS CONDUCTEURS DE PROTONS SPÉCIFIQUES**

VERFAHREN ZUR HERSTELLUNG VON PROTONENLEITENDEN PARTIKELN, WELCHE DIE SAUERSTOFFREDUKTION ODER DIE WASSERSTOFFOXIDATION KATALYSIEREN, DURCH PFROPFUNG VON SPEZIFISCHEN PROTONENLEITENDEN FLUORIERTEN POLYMEREN AUF DEREN OBERFLÄCHEN

PROCESS FOR PREPARING PROTON-CONDUCTING PARTICLES, SUITABLE FOR CATALYSING OXYGEN REDUCTION OR HYDROGEN OXIDATION, BY GRAFTING SPECIFIC PROTON-CONDUCTING FLUORINATED POLYMERS ON THE SURFACE THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.08.2016 FR 1657828**

(43) Date de publication de la demande:
**26.06.2019 Bulletin 2019/26**

(73) Titulaire: **Commissariat à l'Énergie Atomique et aux Énergies Alternatives**
**75015 Paris (FR)**

(72) Inventeurs:
- **BUVAT, Pierrick**
  **37260 Montbazon (FR)**
- **BIGARRE, Janick**
  **37000 Tours (FR)**
- **DRU, Delphine**
  **37250 Sorigny (FR)**

(74) Mandataire: **Brevalex**
**95, rue d'Amsterdam**
**75378 Paris Cedex 8 (FR)**

(56) Documents cités:
**FR-A1- 2 982 173** **FR-A1- 2 982 264**

- **A. FERRANDEZ ET AL: "Chemical Functionalization of Carbon Supported Metal Nanoparticles by Ionic Conductive Polymer via the "Grafting From" Method", CHEMISTRY OF MATERIALS, vol. 25, no. 19, 8 octobre 2013 (2013-10-08), pages 3797-3807, XP055308857, US ISSN: 0897-4756, DOI: 10.1021/cm401264f**
- **A. FERRANDEZ ET AL: "Pt Particles Functionalized on the Molecular Level as New Nanocomposite Materials for Electrocatalysis", LANGMUIR, vol. 28, no. 51, 21 décembre 2012 (2012-12-21), pages 17832-17840, XP055308876, US ISSN: 0743-7463, DOI: 10.1021/la303588t**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 501 050 B1

## Description

### DOMAINE TECHNIQUE

La présente invention se rapporte à un procédé de préparation de particules aptes à catalyser la réduction de l'oxygène ou l'oxydation de l'hydrogène, ces particules étant, de plus, conductrices de protons grâce à une fonctionnalisation desdites particules avec des polymères fluorés organiques conducteurs de protons spécifiques, lesdites particules permettant, une fois incorporées, dans des électrodes de piles à combustible de permettre un fonctionnement à haute densité de courant, sans phénomène de noyage desdites électrodes.

De ce fait, ces particules trouvent leur application dans l'élaboration de matériaux d'électrodes, en particulier de matériaux destinés à entrer dans la constitution de couches catalytiques d'électrodes pour piles à combustible, telles que les piles fonctionnant à $H_2$/air ou à $H_2/O_2$ (connues sous l'abréviation PEMFC signifiant « Proton Exchange Membrane Fuel Cell »).

Ainsi, la présente invention se situe dans le domaine des piles à combustible fonctionnant sur le principe de l'oxydation de l'hydrogène et la réduction de l'oxygène.

### ETAT DE LA TECHNIQUE ANTÉRIEURE

Une pile à combustible de ce type est un générateur électrochimique, qui convertit l'énergie chimique en énergie électrique grâce à deux réactions électrochimiques : une réaction d'oxydation à l'anode d'un combustible (l'hydrogène) combinée à une réaction de réduction à la cathode d'un comburant (l'air ou l'oxygène).

Classiquement, ce type de piles à combustible comporte une pluralité de cellules électrochimiques montées en série, chaque cellule comprenant deux électrodes de polarité opposée séparées par une membrane échangeuse de protons faisant office d'électrolyte solide, cette membrane assurant le passage vers la cathode des protons formés, par réaction électrochimique, lors de l'oxydation du combustible à l'anode.

Les réactions électrochimiques susmentionnées (oxydation et réduction) se produisent au niveau de zones spécifiques des électrodes (dites, zones actives correspondant structurellement à des couches catalytiques) qui forment la jonction entre la couche de diffusion (au niveau de laquelle se produit l'alimentation en réactifs) des électrodes et la membrane et nécessitent, pour se produire, l'utilisation de catalyseurs, qui consistent, classiquement, pour les piles du type PEMFC, en des particules de platine.

Compte tenu des coûts impliqués par la présence d'un catalyseur comme le platine, il convient d'obtenir un maximum de surface catalytique pour une masse donnée de métal, un tel objectif pouvant être atteint par des particules de platine de tailles nanométriques (dénommées également nanoparticules de platine).

Il convient également, pour que les réactions électrochimiques puissent avoir lieu, que les particules de platine soient en contact à la fois avec du combustible ou du comburant (selon que l'on se situe au niveau de l'anode ou de la cathode), du conducteur protonique constitutif de la membrane et du conducteur électronique entrant dans la constitution de l'électrode (ce conducteur électronique étant classiquement un matériau carboné), cette zone de contact étant connue sous l'appellation de point triple, l'électrode étant d'autant plus efficace que le nombre de points triples est élevé.

En d'autres termes, en ces points triples, se présentent au niveau des particules de platine :

- une continuité physique avec la membrane électrolytique, pour assurer une conduction des protons $H^+$;
- une continuité physique avec le conducteur électronique, pour assurer la conduction des électrons ; et
- une continuité physique avec la zone de diffusion des électrodes, pour assurer la diffusion des gaz (l'oxygène ou l'hydrogène pour les piles PEMFC).

Le maintien dans le temps de ces points triples suppose le respect de l'intégrité des zones de contacts entre les différents éléments entrant dans la constitution de ces points triples, ce qui implique un maintien de l'intégrité physique de ces différents éléments, notamment des particules de platine.

Or certaines études ont montré qu'il est possible d'assister, en cours de fonctionnement d'une pile, à une dégradation des particules de platine (induisant, de ce fait, une diminution de surface active) soit par des phénomènes de dissolution ou des phénomènes d'augmentation de tailles de particules (découlant, classiquement, de phénomènes d'agglomération).

Ces phénomènes de dissolution peuvent se produire avec des piles fonctionnant à très faibles pH (par exemple, un pH inférieur à 1) et à potentiels élevés de fonctionnement à la cathode (par exemple, un potentiel supérieur à 1 V par rapport à ERH (ERH signifiant électrode réversible à dihydrogène)) le platine dissous pouvant se retrouver soit dans l'eau formée au cours du fonctionnement de la pile soit à l'intérieur de la membrane électrolytique, généralement polymérique, ce qui conduit, en son sein, à la formation de nanocristaux de platine inactifs.

Quant aux phénomènes d'augmentation, ils peuvent se produire avec des piles dont les nanoparticules de

platine présentent une mobilité importante à la surface du support généralement carboné, sur lequel elles sont déposées, cette mobilité dépendant de l'énergie de surface de celui-ci.

Pour contourner ces phénomènes, il peut être fait appel à de forts taux de chargement en particules de platine avec les inconvénients que cela représente en termes de coûts de production, eu égard au prix très élevé du platine sur les marchés.

Afin de diminuer les taux de chargement tout en accédant à une surface active efficace, les études ont porté sur l'optimisation des assemblages électrode (ici, comprenant des particules de platine)-membrane.

Ainsi, il a été proposé de juxtaposer, par contact intime, les différents éléments (particules de platine, conducteur électrique et électrolyte) nécessaires à la création des points triples, cette juxtaposition pouvant consister :

- à mélanger des particules de platine avec de la poudre de carbone (remplissant le rôle de conducteur électrique) et à imprégner l'ensemble avec de l'électrolyte, de sorte à garantir un meilleur contact avec la membrane ;
- à déposer par des techniques de dépôts de couches minces (telles que l'électrodéposition ou la pulvérisation par voie physique) des particules de platine, ce qui permet de déposer du platine selon de faibles concentrations tout en conservant une activité catalytique très élevée.

Toutefois, les ensembles résultant de ces techniques sont fragiles en raison des liaisons faibles impliquées pour juxtaposer les éléments constitutifs de ces ensembles, ce qui ne permet pas d'empêcher les phénomènes de dégradation dus à la migration des particules de platine occasionnant, de ce fait, une diminution de la durée de vie de ces ensembles.

Par ailleurs, la question de l'obtention d'une tension maximale se pose également, notamment dans des considérations de densité de courant élevées.

En théorie, la tension maximale d'une monocellule d'une pile à combustible à membrane échangeuse de protons (PEMFC) est de l'ordre de 1,23 V. Cependant, cette tension est celle correspondant à un état d'équilibre, car elle résulte du calcul à partir du potentiel thermodynamique des demi-réactions électrochimiques aux électrodes et n'a de réalité que pour un système qui n'est parcouru par aucun courant, d'où l'appellation de tension en circuit ouvert (OCV). Lors de la fermeture du circuit et donc du fonctionnement de la pile, différents phénomènes entrent en jeu induisant une perte de tension, lesquels phénomènes peuvent être visualisés sur une courbe de polarisation, un exemple de courbe de polarisation classique étant représenté sur la figure 1 jointe en annexe, une telle courbe illustrant l'évolution de la tension E en fonction de la densité de courant D, cette courbe étant découpée en trois parties : une première partie dite d'activation, une deuxième partie dite de résistance et une troisième partie dite de diffusion (nommées respectivement a, b et c sur la figure 1).

La première partie, à faibles densités de courant, correspond à un domaine où les surtensions d'activation constituent le phénomène prédominant.

Les surtensions d'activation sont représentatives de la cinétique de réaction. Pour démarrer une réaction chimique, et plus particulièrement une réaction électrochimique, il est nécessaire de franchir une barrière d'activation, qui peut être plus ou moins élevée. Dans une pile à combustible PEMFC, cette barrière est relativement importante, notamment à la cathode, où siège la réaction de réduction du dioxygène. La réaction limitante étant cette réaction de réduction du dioxygène, la contribution anodique peut être, en première approximation, négligée. Le catalyseur a pour visée de diminuer la barrière d'activation tout en permettant une sélectivité de la réaction.

La deuxième partie correspondant à la partie linéaire de la courbe illustre un domaine où la chute ohmique est le phénomène prédominant. Lors du fonctionnement de la pile, les résistances de transferts électroniques et ioniques engendrent des pertes de tension. Les pertes ohmiques responsables d'un dégagement de chaleur par effet Joule entraînent une chute importante du rendement. La chute ohmique trouve une origine au niveau des électrodes (en termes de résistance électrique et protonique), des interfaces électrode-membrane (en termes de résistance électrique et protonique) et des membranes (en termes de résistance protonique).

Les résistances des électrodes et de la membrane obéissent à la loi d'Ohm de type U=RI, d'où la relation linéaire dans la zone de densités de courants intermédiaires.

Enfin, la troisième partie, dans la zone de fortes densités de courant, correspond à la partie infléchie de la courbe. Dans cette zone, les performances sont essentiellement dépendantes des phénomènes d'apport des réactifs.

En effet, aux fortes densités de courant, de nombreuses réactions électrochimiques entrent en jeu, nécessitant l'apport d'une quantité importante de matière actif (que ce soient des protons, des électrons, de l'oxygène dans le cas de la cathode). A la cathode, l'oxygène est distribué par des plaques bipolaires avant de traverser la couche de diffusion de l'électrode et de migrer à travers la couche catalytique de l'électrode. La vitesse d'apport en oxygène dépend donc de la capacité de l'oxygène à diffuser à travers tous ces matériaux. Lorsque l'apport d'oxygène ne couvre plus cette demande, les réactions électrochimiques ne sont plus possibles et la puissance diminue brutalement.

Par ailleurs, dans cette zone de fortes densités de courant, le grand nombre de réactions entraîne à la cathode la formation d'une grande quantité d'eau. Cette eau est formée à la surface des particules catalytiques, par exemple,

en platine et il devient donc nécessaire d'évacuer l'eau, afin de rendre accessible la surface à de nouvelles molécules d'oxygène. Dans le cas contraire, un film d'eau se forme à la surface des particules catalytiques, provoquant le noyage des électrodes.

Les documents FR 2 982 264 et Langmuir, Vol. 28, n°51, p.17832-17840 décrivent, de manière générale, un procédé de préparation de particules comprenant un matériau apte à catalyser la réduction de l'oxygène ou l'oxydation de l'hydrogène (par exemple, des particules de platine), lesdites particules étant fonctionnalisées par des polymères comprenant au moins un motif répétitif porteur d'au moins un groupe conducteur de protons, ledit procédé comprenant une étape a) de mise en contact de particules comprenant un matériau apte à catalyser la réduction de l'oxygène ou l'oxydation de l'hydrogène avec un polymère comprenant au moins un motif répétitif porteur d'au moins un groupe conducteur de protons et comprenant au moins une partie correspondant à un reste organique d'un composé amorceur d'une polymérisation du type ATRP, ledit reste comprenant au moins un groupe apte à se greffer à la surface desdites particules, moyennant quoi l'on obtient des particules greffées par des polymères comprenant au moins un motif répétitif porteur d'au moins un groupe conducteur de protons.

Les documents FR 2 982 173 et Chemistry of Materials, Vol. 25, n°19, p. 3797-3807 décrivent, de manière générale, un procédé de préparation de particules comprenant un matériau apte à catalyser la réduction de l'oxygène ou l'oxydation de l'hydrogène (par exemple, des particules de platine), lesdites particules étant fonctionnalisées par des polymères comprenant au moins un motif répétitif porteur d'au moins un groupe conducteur de protons, ledit procédé comprenant successivement les étapes suivantes :

a) une étape de mise en contact de particules comprenant un matériau apte à catalyser la réduction de l'oxygène ou l'oxydation de l'hydrogène avec un composé amorceur d'une polymérisation du type ATRP, lequel composé comprend au moins un groupe apte à se greffer à la surface desdites particules, moyennant quoi l'on obtient des particules greffées par un reste dudit composé amorceur ;

b) une étape de mise en contact desdites particules obtenues en a) avec au moins un monomère porteur d'au moins un groupe conducteur de protons, moyennant quoi il y a polymérisation dudit monomère à partir des restes susmentionnés.

Au vu des problématiques susmentionnées, les auteurs de la présente invention se sont donc fixé pour objectif de proposer un nouveau procédé qui permettrait, en outre, d'obtenir des particules qui, une fois incorporées, dans une pile à combustible, permettraient d'obtenir une amélioration des propriétés électrochimiques de la pile à combustible et, en particulier, une fois incorporées, dans des électrodes de piles à combustible de permettre un fonctionnement à hautes densités de courant, sans phénomène de noyage desdites électrodes.

## EXPOSÉ DE L'INVENTION

Ainsi, l'invention a trait à un procédé de préparation de particules comprenant un matériau apte à catalyser la réduction de l'oxygène ou l'oxydation de l'hydrogène, lesdites particules étant greffées par des greffons consistant en au moins un polymère comprenant au moins un motif répétitif styrénique porteur d'au moins un groupe conducteur de protons, éventuellement sous forme d'un sel, ledit procédé comprenant :

a) une étape de préparation d'au moins un polymère par polymérisation ATRP:

- d'un monomère styrénique fluoré éventuellement porteur d'au moins un groupe conducteur de protons, éventuellement sous forme d'un sel ; et
- éventuellement, d'un monomère styrénique non fluoré porteur d'au moins un groupe conducteur de protons, éventuellement sous forme d'un sel ;

avec un amorceur ATRP répondant à la formule (I) suivante :

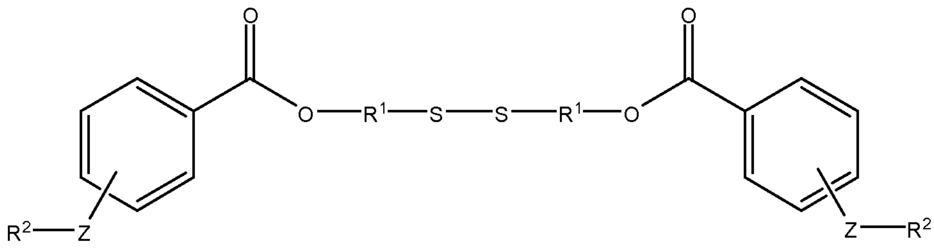

(I)

dans laquelle :

- les groupes $R^1$ représentent, indépendamment l'un de l'autre, un groupe espaceur organique ;
- les groupes Z représentent, indépendamment l'un de l'autre, une liaison simple ou un groupe espaceur organique ;
- les groupes $R^2$ représentent, indépendamment l'un de l'autre, un atome d'halogène ;

le polymère résultant répondant à la formule (II) suivante :

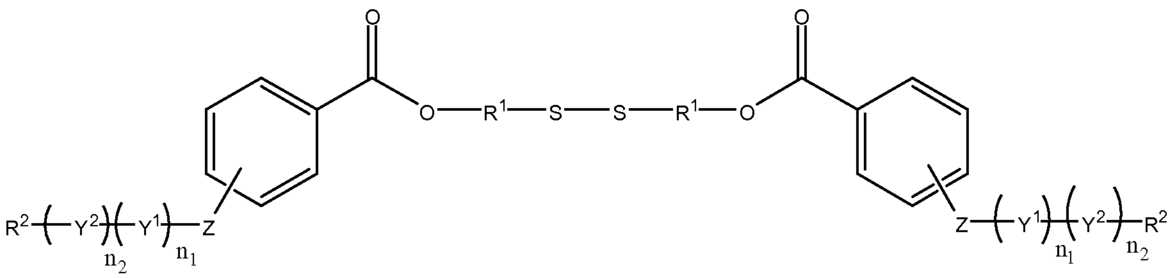

(II)

dans laquelle :

- $Y^1$ correspond au motif répétitif issu de la polymérisation du monomère styrénique fluoré éventuellement porteur d'au moins un groupe conducteur de protons, éventuellement sous forme d'un sel, et $n_1$ correspond au nombre de répétition du motif répétitif pris entre parenthèses, ce nombre de répétition étant un entier positif au moins égal à 2 ;
- $Y^2$ correspond au motif répétitif issu de la polymérisation du monomère styrénique non fluoré porteur d'au moins un groupe conducteur de protons, éventuellement sous forme d'un sel, et $n_2$ correspond au nombre de répétition du motif répétitif pris entre parenthèses, ce nombre de répétition étant égal à 0 ou étant un entier positif au moins égal à 2 ;
- $R^1$, $R^2$ et Z étant tels que définis ci-dessus ;

b) lorsque le motif répétitif issu de la polymérisation du monomère styrénique fluoré n'est pas porteur d'au moins un groupe conducteur de protons, éventuellement sous forme d'un sel, une étape d'introduction sur ce motif répétitif d'au moins un groupe conducteur de protons, éventuellement sous forme d'un sel, le motif $Y^1$ correspondant ainsi désormais à un motif répétitif styrénique fluoré porteur d'au moins un groupe conducteur de protons, éventuellement sous forme d'un sel ;

c) une étape de mise en contact de particules comprenant un matériau apte à catalyser la réduction de l'oxygène ou l'oxydation de l'hydrogène avec le polymère obtenu en a) ou, le cas échéant, en b), moyennant quoi l'on obtient des particules greffées par des greffons de formule (III) suivante :

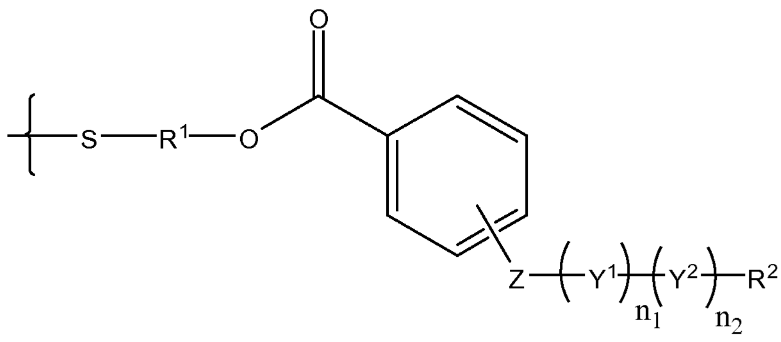

(III)

l'accolade indiquant l'endroit par lequel les greffons sont liés, de manière covalente, aux particules et les $R^1$, $R^2$, Z, $Y^2$, $n_1$ et $n_2$ étant tels que définis ci-dessus et $Y^1$ constitue un motif répétitif styrénique fluoré porteur d'au moins un groupe conducteur de protons, éventuellement sous forme d'un sel.

En particulier, les groupes $R^1$ peuvent être identiques entre eux, de même que les groupes Z peuvent être identiques entre eux et les groupes $R^2$ peuvent être identiques entre eux.

Concernant le groupe $Y^1$, celui-ci, pour l'étape a), correspond à un motif répétitif issu de la polymérisation d'un monomère styrénique fluoré éventuellement porteur d'au moins un groupe conducteur de protons, éventuellement sous forme d'un sel, ce qui englobe deux cas de figure :

- le cas où $Y^1$ est un motif répétitif issu de la polymérisation d'un monomère styrénique fluoré porteur d'au moins un groupe conducteur de protons, éventuellement sous forme d'un sel, ce qui signifie que l'étape b) ne sera pas nécessaire ;
- le cas où $Y^1$ est un motif répétitif issu de la polymérisation d'un monomère styrénique fluoré non porteur d'au moins un groupe conducteur de protons, éventuellement sous forme d'un sel, ce qui signifie que l'étape b) sera nécessaire.

Pour l'issue de l'étape b) et pour l'étape c), le groupe $Y^1$ correspond à un motif répétitif styrénique fluoré porteur d'au moins un groupe conducteur de protons, éventuellement sous forme d'un sel, ce motif correspondant directement à celui de l'étape a) (lorsque, dès l'étape a), $Y^1$ correspond à un motif répétitif issu de la polymérisation d'un monomère styrénique fluoré porteur d'au moins un groupe conducteur de protons, éventuellement sous forme d'un sel) ou correspondant au motif répétitif issu de l'étape a) transformé lors de l'étape b) par introduction d'au moins un groupe conducteur de protons, éventuellement sous forme d'un sel.

Avant d'entrer plus en détail dans la présente description, nous précisons les définitions suivantes.

Par polymère, on entend, classiquement, au sens de l'invention, un composé constitué par l'enchaînement d'un ou plusieurs motifs répétitifs (la dénomination copolymère pouvant être utilisée lorsque le polymère comprend, à la fois, un motif répétitif $Y^1$ et un motif répétitif $Y^2$).

Par motif répétitif, on entend, classiquement, au sens de l'invention, un groupe organique bivalent (c'est-à-dire un groupe formant pont) issu d'un monomère après polymérisation de celui-ci.

Par polymérisation du type ATRP, on entend, une polymérisation radicalaire par transfert d'atomes (ATRP correspondant à l'abréviation de la terminologie anglaise « Atom Transfer Radical Polymerization »). Le mécanisme de ce type de polymérisation sera explicité plus en détail ci-dessous.

Ainsi, grâce à la mise en œuvre du procédé de l'invention, il est ainsi possible d'obtenir des particules comprenant un matériau apte à catalyser la réduction de l'oxygène ou l'oxydation de l'hydrogène greffées par covalence *via* un reste du composé amorceur ATRP par des polymères styréniques spécifiques conducteurs de protons, ce qui permet, lorsque ces particules sont destinées à entrer dans la constitution d'électrodes (notamment au niveau de couches catalytiques de celles-ci) d'assurer de bonnes performances à des densités de courant élevées, grâce notamment à la présence dans le polymère conducteur de protons de motifs répétitifs styréniques fluorés, qui assurent un caractère hydrophobe qui va empêcher, notamment, le phénomène de noyage des électrodes à l'origine de la dégradation des propriétés pour des densités de courant élevées.

Comme mentionné ci-dessous, le procédé de l'invention comporte une étape de préparation d'au moins un polymère par polymérisation ATRP d'un monomère styrénique fluoré éventuellement porteur d'au moins un groupe conducteur de protons, éventuellement sous forme d'un sel et, éventuellement, d'un monomère styrénique non fluoré porteur d'au moins un groupe conducteur de protons, éventuellement sous forme d'un sel, avec un amorceur ATRP répondant à la formule (I) telle que définie ci-dessus.

Selon un mode de réalisation particulier de l'invention, l'étape de préparation met en jeu un monomère styrénique fluoré, qui n'est pas porteur d'au moins un groupe conducteur de protons, éventuellement sous forme d'un sel (ce qui signifie, en d'autres termes, que le procédé de l'invention comportera, en plus, la mise en œuvre de l'étape b)) et, éventuellement, un monomère styrénique non fluoré porteur d'au moins un groupe conducteur de protons, éventuellement sous forme d'un sel.

Cette étape de préparation est régie par les mécanismes de la polymérisation ATRP, qui fonctionne sur le principe de la formation réversible et rapide d'espèces dites « espèces dormantes » par création d'une liaison covalente avec une espèce radicalaire réactive.

Le composé amorceur d'une polymérisation du type ATRP de formule (I) est un composé comprenant au moins un groupe apte à amorcer la polymérisation ATRP, c'est-à-dire un groupe apte à se cliver au niveau d'une liaison pour former une première espèce radicalaire et une deuxième espèce radicalaire, la première espèce radicalaire réagissant ultérieurement, avec un premier carbone porteur d'une double liaison appartenant au(x) monomère(s), la deuxième espèce radicalaire se fixant à un deuxième atome opposé au premier carbone porteur de la double liaison.

En d'autres termes, ce mécanisme peut être résumé selon le schéma réactionnel suivant :

$$X^1\text{-}X^2 + C{=}C \rightarrow X^1\text{-}C\text{-}C\text{-}X^2$$

$X^1$-$X^2$ correspondant à l'amorceur susmentionné avec $X^1$ correspondant à la première espèce et $X^2$ correspondant à la deuxième espèce, l'espèce $X^1$-C-C-$X^2$ étant une espèce dormante, qui peut croître par additions successives de monomères sur des radicaux libres, comme dans une polymérisation radicalaire classique, les radicaux libres étant créés par départ du groupe $X^2$, qui se fixe ensuite après insertion du monomère à l'extrémité de la chaîne polymérique, laquelle constitue toujours une espèce dormante qui peut continuer à croître dès lors qu'il subsiste des monomères dans le milieu de polymérisation.

Pour des raisons de simplicité, nous avons représenté ci-dessus uniquement la double liaison du monomère.

En outre, le composé amorceur de formule (I) utilisé dans le cadre de cette étape de préparation comprend au moins un groupe apte à se greffer à la surface des particules susmentionnées, c'est-à-dire un groupe apte à réagir avec la surface desdites particules pour former une liaison covalente, moyennant quoi il subsiste un reste de cet amorceur lié de façon covalente à la surface desdites particules.

Pour les composés amorceurs de formule (I), le groupe apte à amorcer une polymérisation du type ATRP est le groupe -Z-$R^2$ mentionné ci-dessus, ce groupe pouvant se cliver, de façon homolytique, au niveau de la liaison carbone-halogène pour former deux espèces radicalaires, une première espèce radicalaire carbone (pouvant être symbolisé par $-C^{\cdot}$) et une deuxième espèce radicalaire consistant en un radical halogène (pouvant être symbolisé par $R_2\cdot$), la première espèce réagissant avec une extrémité de la double liaison du monomère et la deuxième espèce réagissant avec l'extrémité opposée de la double liaison. Sur la formule (I), ce groupe -Z-$R^2$ étant représenté comme entrecoupant une liaison carbone-carbone du groupe phényle, cela signifie qu'il peut être lié à l'un quelconque des atomes de carbone de ce groupe phényle et, en particulier, peut être situé en position *para* par rapport au groupe -COO-.

Le groupe apte à se greffer à la surface de particules correspond, pour ce type de composés, au groupe disulfure -S-S-.

Pour les composés de formule (I), les groupes $R^1$ et les groupes Z peuvent représenter, indépendamment l'un de l'autre, un groupe alkylène, par exemple, un groupe éthylène, un groupe méthylène.

Plus spécifiquement, les $R^1$ peuvent être un groupe éthylène et les Z peuvent être un groupe méthylène.

Quand les Z représentent une liaison simple, cela signifie, en d'autres termes, que $R^2$ est directement lié à l'un quelconque des atomes de carbone du groupe phényle.

Pour les composés de formule (I), les groupes -Z-$R^2$ peuvent être situés en position *para* par rapport aux groupes -COO-.

Un composé amorceur ATRP particulier entrant dans catégorie des composés de formule (I) est un composé de formule (IV) suivante :

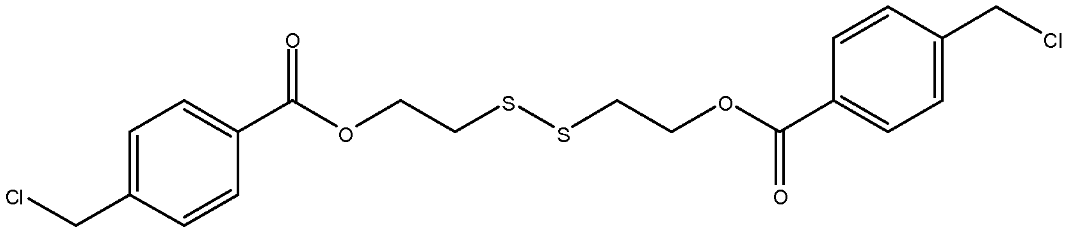

(IV)

Les composés de formule (I) peuvent être synthétisés par une réaction de substitution nucléophile entre un composé halogénure d'acyle et un composé alcoolique, cette réaction étant basée sur la formation d'un alcoolate à partir de la déprotonation du composé alcoolique en milieu basique (par exemple, en présence, de triéthylamine), l'alcoolate ainsi formé réagissant sur le chlorure d'acyle pour former le composé amorceur, généralement à une température de l'ordre de 0°C, de sorte à assurer la stabilité de l'alcoolate.

A titre d'exemple, lorsqu'il s'agit de préparer un composé de formule (IV) susmentionnée, la réaction d'acylation peut se produire entre le composé 2-hydroxyéthyldisulfure et le composé chlorure de 4-chlorométhylbenzoyle selon le schéma réactionnel suivant :

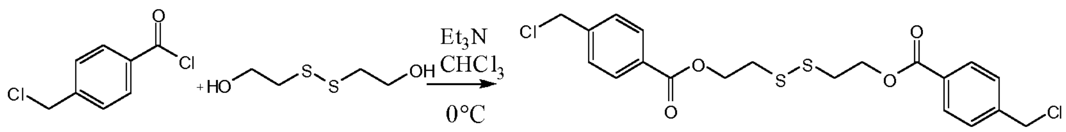


cette réaction pouvant être réalisée avec du chloroforme comme solvant organique.

Le monomère styrénique fluoré susceptible d'être utilisé dans le cadre de l'étape de préparation peut être un monomère répondant à la formule (V) suivante :

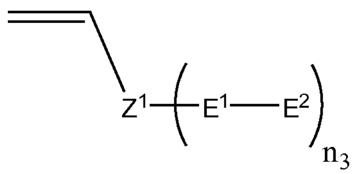

(V)

- $Z^1$ correspond à un groupe phénylène fluoré; et
- $E^1$ correspond à une liaison simple ou un groupe espaceur organique ;
- $E^2$ correspond à un groupe conducteur de protons, éventuellement sous forme d'un sel, tel qu'un groupe acide sulfonique, un groupe acide phosphonique ou un groupe acide carboxylique ;
- $n_3$ est égal à 0 ou à 1.

Lorsque $n_3$ est égal à 0, cela signifie que $-E^1-E^2$ n'existe pas et que la formule se résume à la formule (VI) suivante :

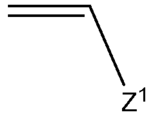

(VI)

la position vacante laissée par l'absence de $-E^1-E^2$ sur le groupe $Z^1$ étant occupée par un atome de fluor sur ce groupe $Z^1$.

Lorsque $n_3$ est égal à 1, cela signifie que $-E^1-E^2$ est présent et que la formule peut se résumer ainsi à la formule (VII) suivante :

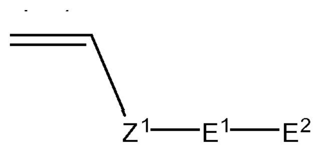

(VII)

Selon une variante, $E^2$ peut être lié directement à $Z^1$ et, plus spécifiquement, à un atome de carbone du groupe phénylène fluoré, lorsque $E^1$ est une liaison simple. Par exemple, $E^2$ peut être situé en position *para* sur ce groupe phénylène fluoré.

Selon une autre variante, $E^2$ peut être lié à $Z^1$ via un groupe espaceur organique $E^1$, lui-même étant lié à un atome de carbone du groupe phénylène fluoré, par exemple, en position *para* sur ce groupe phénylène fluoré.

$E^1$, lorsqu'il est un groupe espaceur organique, peut être un groupe alkylène, un groupe -S-alkylène- ou un groupe -O-alkylène (dans ces deux derniers cas, l'atome de S et l'atome d'O sont liés directement au groupe phénylène fluoré), lesdits groupes alkylènes pouvant comporter de 1 à 4 atomes de carbone, tels qu'un groupe méthylène, un groupe éthylène, un groupe propylène, un groupe butylène.

Plus spécifiquement, $E^1$, lorsqu'il est un groupe espaceur organique, peut être un groupe -O-propylène de formule (VIII) suivante :

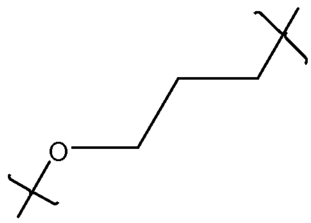

(VIII)

l'accolade au niveau de l'atome d'oxygène indiquant l'endroit par lequel l'atome d'oxygène est lié au groupe phénylène fluoré et l'accolade au niveau du dernier atome de carbone indiquant que cet atome de carbone est lié au groupe $E^2$.

Que ce soit pour le groupe $E^2$ (lorsque $E^1$ est une liaison simple) ou le groupe $E^1$ (lorsque $E^1$ est un groupe espaceur organique), ces groupes peuvent occuper l'un quelconque des atomes de carbone du groupe phénylène fluoré et en particulier, la position *para*.

Quelle que soit la variante retenue, le monomère styrénique fluoré peut ne comporter que des atomes de fluor au niveau des atomes de carbone libres du cycle phénylène.

Un exemple de monomère styrénique fluoré est un monomère de formule (IX) suivante :

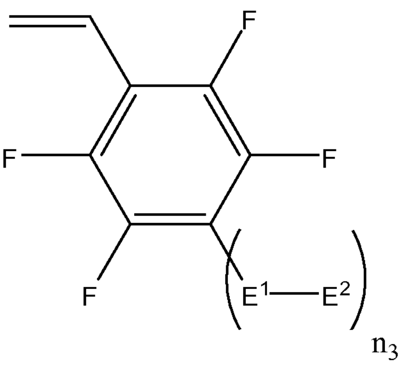

(IX)

dans laquelle $E^1$, $E^2$, $n_3$ sont tels que définis ci-dessus, avec pour particularité que, lorsque $n_3$ est égal à 0, la position vacante laissée par l'absence $-E^1-E^2$ est occupée par un atome de fluor.

Encore plus spécifiquement, des exemples particuliers de monomères styréniques fluorés sont les monomères répondant aux formules (X) et (XI) suivantes :

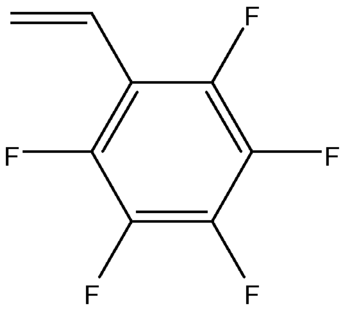

(X)

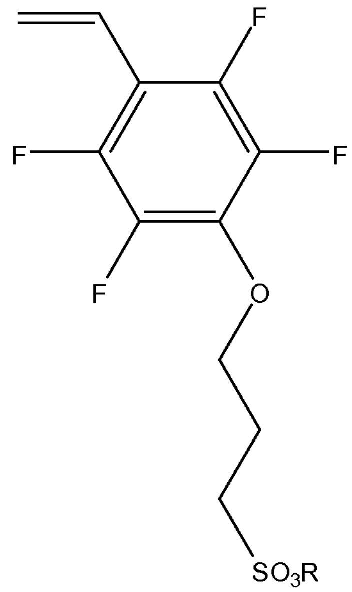

(XI)

dans laquelle R est un atome d'hydrogène ou un cation (par exemple, un cation de métal alcalin).

Ces monomères, lorsqu'ils ne sont pas disponibles commercialement, peuvent faire l'objet d'une préparation préalable par des voies de synthèse classique de la chimie organique.

Ainsi, par exemple, lorsqu'il s'agit de préparer un monomère de formule (XI) ci-dessous, celui-ci peut être préparé par la réaction d'un tétrafluorostyrène hydroxylé avec, dans un premier temps, une base pour former un hydroxylate, lequel va réagir avec un composé sultone (plus spécifiquement, le 1,3-propanesultone) pour former le monomère susmentionné, le mécanisme de la réaction résidant en une addition nucléophile de l'hydroxylate avec le composé sultone provoquant ainsi une ouverture de cycle.

Lorsqu'il est présent, le monomère styrénique non fluoré peut répondre à la formule (XII) suivante :

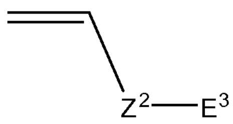

(XII)

dans laquelle :

- $Z^2$ correspond à un groupe phénylène ; et
- $E^3$ correspond à un groupe conducteur de protons, éventuellement sous forme d'un sel, tel qu'un groupe acide sulfonique, un groupe acide phosphonique ou un groupe acide carboxylique.

Un monomère spécifique répondant à la définition donnée ci-dessus est un monomère acide styrènesulfonique, par exemple sous forme d'un sel, tel qu'un sel de sodium (auquel cas, on pourra parler de monomère styrènesulfonate de sodium).

Un exemple de ce type de monomère est un monomère de formule (XIII) suivante :

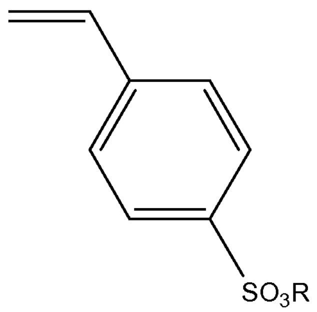

(XIII)

dans laquelle R est un atome d'hydrogène ou un cation (par exemple, un cation de métal alcalin).

Outre la présence d'un ou plusieurs monomères tels que définis ci-dessus, l'étape de préparation peut se dérouler, classiquement, en présence d'un sel métallique (par exemple, un halogénure métallique, tel qu'un halogénure de cuivre, comme le chlorure de cuivre) et d'un ligand organique.

On précise que, par ligand organique, on entend un composé organique comprenant au moins un doublet libre apte à venir combler une lacune électronique d'un élément métallique (en l'occurrence, dans notre cas, une lacune électronique sur l'élément métallique du sel susmentionné) pour former un complexe métallique.

A titre d'exemple, un ligand organique approprié peut être un composé appartenant à la famille des composés pyridines, tels que la bipyridine.

L'étape de préparation du polymère peut être réalisée, en outre, dans un solvant apolaire aprotique, tel qu'un solvant sulfoxyde, notamment lorsque la polymérisation fait intervenir un monomère styrénique fluoré, dont le ou les groupes protecteurs de protons sont introduits ultérieurement lors de l'étape b), pendant une température et durée appropriées pour engendrer la polymérisation, par exemple, une température de 80°C.

En variante, l'étape de préparation du polymère peut être réalisée, en outre, dans un mélange eau/solvant organique (par exemple, un solvant alcoolique) sous flux d'un gaz inerte (tel qu'un flux d'argon) pendant une température et durée appropriées pour engendrer la polymérisation.

En outre, cette étape de préparation du polymère peut être suivie d'une étape d'hydrolyse destinée à protoner les groupes conducteurs de protons, lorsqu'ils se présentent sous forme d'un sel (soit, en d'autres termes, cette étape consiste à remplacer les cations du sel par des atomes d'hydrogène).

Les masses molaires moyennes des polymères obtenus à l'issue de l'étape de polymérisation peuvent aller de 2000 à 1 000 000 g/mol, de préférence de 50 000 à 500 000 g/mol .

Avantageusement, lorsque le polymère comprend au moins un motif répétitif issu de la polymérisation d'un ou plusieurs monomères styréniques non fluorés, la proportion dudit motif répétitif est moindre que celle du motif répétitif issu de la polymérisation du ou des monomères styréniques fluorés.

Après l'étape a), le procédé comprend, le cas échéant, lorsque le motif répétitif issu de la polymérisation du monomère styrénique fluoré n'est pas porteur d'au moins un groupe conducteur de protons, éventuellement sous forme d'un sel, une étape d'introduction sur ce motif répétitif d'au moins un groupe conducteur de protons, éventuellement sous forme de sel, le motif répétitif $Y^1$ correspondant ainsi désormais à un motif répétitif styrénique fluoré porteur d'au moins un groupe conducteur de protons, éventuellement sous forme de sel.

Ce groupe conducteur de protons peut être introduit directement sur le cycle phénylène du motif répétitif styrénique ou soit *via* un groupe espaceur organique, ce qui signifie que le groupe espaceur organique est directement lié au cycle phénylène et forme pont entre le cycle phénylène et le groupe conducteur de protons, éventuellement sous forme de sels.

Cette introduction peut être effectuée par toutes voies de synthèse chimiques appropriées.

Ainsi, à titre d'exemple, lorsque le motif répétitif est issu de la polymérisation du monomère pentafluorostyrène et que le groupe conducteur de protons destiné à être introduit est un groupe acide sulfonique lié directement au cycle phénylène, l'étape d'introduction peut comporter les opérations suivantes :

- une opération de sulfuration du cycle benzénique consistant en une substitution d'un atome de fluor par un groupe -S-R avec R représentant un atome d'hydrogène ou un cation, tel qu'un cation de métal alcalin ; et
- une opération d'oxydation du groupe sulfure pour former un groupe $-SO_3R$ avec R étant tel que défini ci-dessus.

Plus précisément, l'opération de sulfuration peut consister à faire réagir de l'hydrogénosulfure de sodium hydraté dans du diméthylsulfoxyde, permettant l'introduction d'un groupe -S-Na, par exemple, en position *para*.

Quant à l'opération d'oxydation du groupe sulfure, elle peut s'effectuer, en présence d'un oxydant, tel que l'eau

oxygénée.

En variante, lorsque le motif répétitif est issu de la polymérisation du monomère pentafluorostyrène et que le groupe conducteur de protons destiné à être introduit est un groupe acide sulfonique lié à un groupe espaceur organique, l'étape d'introduction peut comporter les opérations suivantes :

- une opération de sulfuration du cycle benzénique consistant en une substitution d'un atome de fluor par un groupe -S-R avec R représentant un atome d'hydrogène ou un cation, tel qu'un cation de métal alcalin ;
- une opération d'addition nucléophile du groupe -S-R sur un composé sultone engendrant ainsi une ouverture de cycle, moyennant quoi il y a formation d'un groupe $-E^1-SO_3R$, avec $E^1$ étant un groupe espaceur organique du type -S-alkylène.

Plus précisément, il peut s'agir d'une réaction d'addition nucléophile d'un groupe thiolate de sodium sur un composé 1,3-propanesultone, se traduisant par une ouverture de cycle et formant ainsi un groupe $-S-CH_2-CH_2-CH_2-SO_3Na$.

Après l'étape a), si l'étape b) n'est pas nécessaire ou après l'étape b), le procédé de l'invention comprend une étape de mise en contact de particules comprenant un matériau apte à catalyser la réduction de l'oxygène ou l'oxydation de l'hydrogène avec le polymère obtenu en a) ou, le cas échéant, en b), moyennant quoi l'on obtient des particules greffées par des greffons de formule (III) suivante :

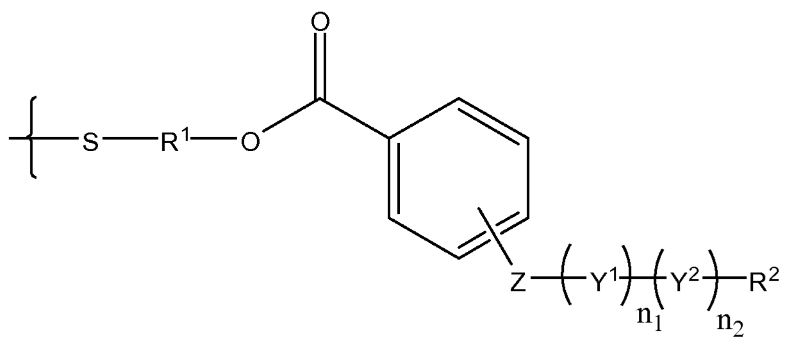

(III)

l'accolade indiquant l'endroit par lequel les greffons sont liés, de manière covalente, aux particules et les $R^1$, $R^2$, Z, $Y^2$, $n_1$ et $n_2$ étant tels que définis ci-dessus et $Y^1$ est un motif répétitif styrénique fluoré porteur d'au moins un groupe conducteur de protons, éventuellement sous forme d'un sel, le groupe $-Z-(Y^1)_{n1}-(Y^2)_{n2}-R^2$, qui entrecoupe une liaison carbone-carbone du groupe phényle, signifiant qu'il peut être lié à l'un quelconque des atomes de carbone du groupe phényle.

On note que les motifs répétitifs $Y^1$ et $Y^2$ peuvent être répartis de manière aléatoire, de manière alternée ou de manière séquencée, ce qui signifie respectivement, en d'autres termes, que les motifs répétitifs $Y^1$ et $Y^2$ sont répartis de façon aléatoire dans le copolymère, les motifs répétitifs $Y^1$ et $Y^2$ sont alternés dans le copolymère ou encore les motifs répétitifs $Y^1$ et $Y^2$ sont répartis sous forme de blocs (à savoir, un bloc de motifs répétitifs $Y^1$ et un bloc de motifs répétitifs $Y^2$) dans le copolymère.

Cette étape c) de mise en contact peut comprendre une opération de dispersion des particules susmentionnées, par exemple, dans un solvant électrophile (tel qu'un solvant amine, tel que l'hexylamine) suivie d'une opération de mise en contact de la dispersion obtenue avec un ou plusieurs polymères tels que définis ci-dessus dans des conditions suffisantes pour permettre le greffage par covalence des polymères préparés en a) ou b).

Les particules comprenant un matériau apte à catalyser la réduction de l'oxygène ou l'oxydation de l'hydrogène peuvent être des particules métalliques, à savoir des particules comprenant un ou plusieurs éléments métalliques (auquel cas, lorsqu'il y a plusieurs éléments métalliques, on pourra parler de particules en alliage(s) métallique(s)).

Des particules métalliques particulièrement appropriées peuvent être des particules comprenant un métal noble, tel que le platine, le ruthénium, le palladium et des mélanges de ceux-ci.

Lorsque les particules obtenues selon l'invention sont destinées à être utilisées dans des piles PEMFC, les particules métalliques sont avantageusement des particules en platine.

Sans être lié par la théorie, le polymère, en présence de particules, va se scinder en deux restes organiques par clivage homolytique de la liaison entre les deux atomes de soufre, les deux restes consistant en des espèces radicalaires, les électrons libres étant situés au niveau des atomes de soufre, ces électrons libres s'associant chacun avec un électron présent à la surface des particules pour former une liaison covalente entre les restes susmentionnés

et les particules *via* les atomes de soufre, le produit résultant pouvant être schématisé de la façon suivante :

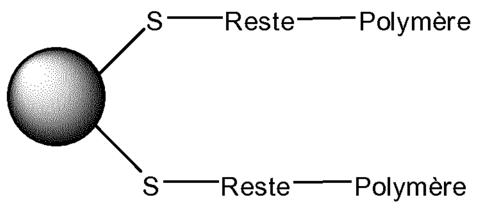

la sphère pleine correspondant à une particule, -S-Reste- correspondant à un reste du composé amorceur ATRP formant pont entre la particule et le polymère (respectivement, une première chaîne polymérique et une deuxième chaîne polymérique).

Concernant le polymère, le groupe conducteur de protons peut être un groupe acide sulfonique $-SO_3H$, un groupe acide carboxylique $-CO_2H$ ou un groupe acide phosphonique $-PO_3H_2$, ces groupes pouvant être présents éventuellement sous forme de sels.

Selon un mode particulier de réalisation de l'invention, le procédé peut concerner la préparation de particules greffées par un polymère ne comportant pas de motif $Y^2$, auquel cas le procédé peut être formulé comme étant un procédé de préparation de particules comprenant un matériau apte à catalyser la réduction de l'oxygène ou l'oxydation de l'hydrogène, lesdites particules étant greffées par des greffons consistant en au moins un polymère comprenant au moins un motif répétitif styrénique porteur d'au moins un groupe conducteur de protons, éventuellement sous forme d'un sel, ledit procédé comprenant :

a) une étape de préparation d'au moins un polymère styrénique par polymérisation ATRP d'un monomère styrénique fluoré éventuellement porteur d'au moins un groupe conducteur de protons, éventuellement sous forme d'un sel, avec un amorceur ATRP répondant à la formule (I) suivante :

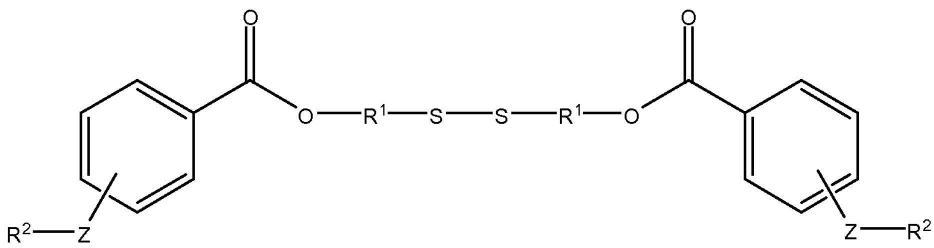

(I)

dans laquelle :

- les groupes $R^1$ représentent, indépendamment l'un de l'autre, un groupe espaceur organique ;
- les groupes Z représentent, indépendamment l'un de l'autre, une liaison simple ou un groupe espaceur organique ;
- les groupes $R^2$ représentent, indépendamment l'un de l'autre, un atome d'halogène ;

le polymère résultant répondant à la formule (II') suivante :

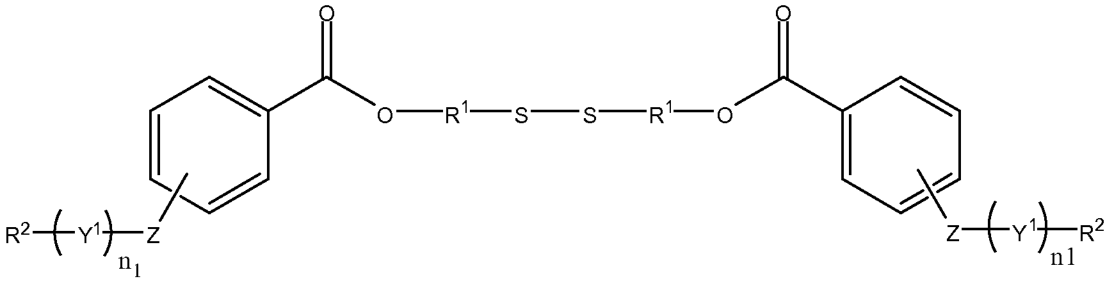

(II')

dans laquelle :

- $Y^1$ correspond au motif répétitif issu de la polymérisation du monomère styrénique fluoré éventuellement porteur d'au moins un groupe conducteur de protons, éventuellement sous forme d'un sel et $n_1$ correspond au nombre de répétition du motif répétitif pris entre parenthèses, ce nombre de répétition étant un entier positif au moins égal à 2 ;
- $R^1$, $R^2$ et Z étant tels que définis ci-dessus ;

b) lorsque le motif répétitif issu de la polymérisation du monomère styrénique fluoré n'est pas porteur d'au moins un groupe conducteur de protons, éventuellement sous forme d'un sel, une étape d'introduction sur ce motif répétitif d'au moins un groupe conducteur de protons, éventuellement sous forme d'un sel, le motif $Y^1$ correspondant ainsi désormais à un motif répétitif styrénique fluoré porteur d'au moins un groupe conducteur de protons, éventuellement sous forme d'un sel ;

c) une étape de mise en contact de particules comprenant un matériau apte à catalyser la réduction de l'oxygène ou l'oxydation de l'hydrogène avec le polymère obtenu en a) ou, le cas échéant, en b), moyennant quoi l'on obtient des particules greffées par des greffons de formule (III') suivante :

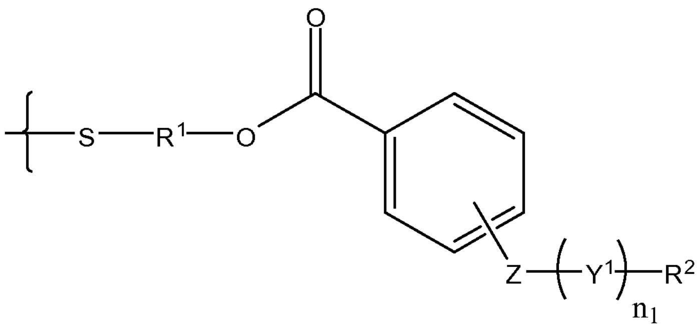

(III')

l'accolade indiquant l'endroit par lequel les greffons sont liés, de manière covalente, aux particules et les $R^1$, $R^2$, Z, $n_1$ et $n_2$ étant tels que définis ci-dessus et $Y^1$ est un motif répétitif styrénique fluoré porteur d'au moins un groupe conducteur de protons, éventuellement sous forme d'un sel.

Préalablement à l'étape a) et/ou b) et/ou c), le procédé de l'invention peut comprendre également une étape de préparation desdites particules susmentionnées, à savoir des particules comprenant un matériau apte à catalyser l'oxydation de l'hydrogène ou la réduction de l'oxygène.

Lorsque les particules sont des particules métalliques, la préparation de ces dernières peut consister à réduire un sel métallique en faisant réagir celui-ci avec un agent réducteur.

Par exemple, lorsque les particules métalliques sont des particules de platine, elles peuvent être préparées par réduction d'un sel de platine avec un agent réducteur.

Le sel de platine peut être un sel d'halogénure de platine, éventuellement hydraté, tel que $H_2PtCl_6.6H_2O$.

L'agent réducteur peut être un hydrure métallique, et plus particulièrement un borohydrure métallique, tel que le borohydrure de sodium ($NaBH_4$).

La préparation peut être réalisée dans un milieu du type émulsion « huile-dans-eau » (correspondant à la terminologie anglaise « *water-in-oil* »), l'huile pouvant correspondre à un composé hydrocarbure, tel que l'hexane.

D'un point de vue pratique, la préparation de particules de platine dans un tel milieu peut se dérouler par la mise en œuvre des opérations suivantes :

- une opération de mise en contact d'un sel de platine (par exemple, $H_2PtCl_6$-$H_20$) préalablement dissous dans de l'eau avec un milieu comprenant une huile et éventuellement un agent dispersant (par exemple, du tétraéthylèneglycoldodécyléther);

- une opération d'ajout au mélange résultant de l'opération précédente d'un agent réducteur, en une ou plusieurs fois, à l'issue de laquelle le mélange résultant est agité pendant une durée suffisante jusqu'à cessation de tout dégagement gazeux (cette cessation indiquant que la réaction de réduction est achevée).

Le mélange final comprend ainsi des particules de platine, lequel mélange peut être utilisé tel quel pour la mise en œuvre de l'étape c) (on pourra ainsi dire que l'étape c) est réalisée *in situ*).

En variante, le mélange final peut être traité (par exemple, par filtration) de sorte à isoler les particules de platine obtenues, ces dernières étant destinées à être utilisées pour la mise en œuvre de l'étape c).

Outre le fait que les particules obtenues selon le procédé de l'invention sont fonctionnalisées par des polymères tels que définis ci-dessus, ces particules peuvent être également liées (par exemple, également, par covalence) à un matériau carboné (pouvant être assimilé à un support carboné), tel que du graphite, du noir de carbone, des fibres de carbone, des tubes de carbone (tels que des nanotubes de carbone), du graphène.

Lorsque les particules sont liées à un matériau carboné, celui-ci peut intervenir à différents moments de la mise en œuvre du procédé de l'invention.

Selon un premier mode de réalisation, les particules peuvent être utilisées déjà liées à un matériau carboné lors de la mise en œuvre de l'étape c).

Ces particules déjà liées à un matériau carboné peuvent être préparées préalablement à l'étape de mise en œuvre de l'étape c).

Dans ce cas, le procédé de l'invention peut comprendre, avant la mise en œuvre de l'étape c), une étape de préparation de particules comprenant un matériau apte à catalyser la réduction de l'oxygène ou l'oxydation de l'hydrogène liées à un matériau carboné.

Selon une première variante, lorsque les particules sont des particules métalliques, la préparation de ces dernières peut comprendre :

- une opération de réduction d'un sel métallique en faisant réagir celui-ci avec un agent réducteur, moyennant quoi l'on obtient des particules métalliques ;
- une opération de mise en contact du milieu résultant de l'opération précédente avec le matériau carboné destiné à être lié aux particules, moyennant quoi l'on obtient des particules métalliques liées à un matériau carboné.

Par exemple, lorsque les particules métalliques sont des particules de platine, l'étape de réduction consiste à réduire un sel de platine avec un agent réducteur.

Le sel de platine peut être un sel d'halogénure de platine, éventuellement hydraté, tel que $H_2PtCl_6.6H_2O$.

L'agent réducteur peut être un hydrure métallique, et plus particulièrement un borohydrure métallique, tel que le borohydrure de sodium ($NaBH_4$).

La préparation peut être effectuée dans un milieu du type émulsion « huile-dans-eau » (correspondant à la terminologie anglaise « *water-in-oil* »), l'huile pouvant correspondre à un composé hydrocarbure, tel que l'hexane.

D'un point de vue pratique, la préparation de particules de platine dans un tel milieu, avant la mise en contact avec le matériau carboné, peut se dérouler par la mise en œuvre des opérations suivantes :

- une opération de mise en contact d'un sel de platine (par exemple, $H_2PtCl_6$-$H_20$) préalablement dissous dans de l'eau avec un milieu comprenant une huile et éventuellement un agent dispersant ;
- une opération d'ajout au mélange résultant de l'opération précédente d'un agent réducteur, à l'issue de laquelle le mélange résultant est agité pendant une durée suffisante jusqu'à cessation de tout dégagement gazeux (cette cessation indiquant que la réaction de réduction est achevée), moyennant quoi l'on obtient un mélange comprenant des particules de platine.

Ce mélange comprenant des particules de platine est mis ensuite en contact avec le matériau carboné, de préférence sous ultrasons, moyennant quoi l'on obtient, à l'issue de cette opération de mise en contact, un mélange final comprenant des particules de platine liées au matériau carboné, lequel mélange peut être utilisé tel quel pour la

mise en œuvre de l'étape c).

En variante, ce mélange final peut être traité (par exemple, par filtration) de sorte à isoler les particules de platine obtenues, ces dernières étant destinées à être utilisées pour la mise en œuvre de l'étape c).

Selon une deuxième variante, lorsque les particules sont des particules métalliques, la préparation peut consister en une étape de réduction au moyen d'un agent réducteur d'un mélange comprenant un sel métallique et un matériau carboné, en faisant réagir celui-ci avec un agent réducteur, moyennant quoi l'on obtient des particules métalliques liées au matériau carboné.

Par exemple, lorsque les particules métalliques sont des particules de platine, l'étape de réduction consiste à réduire un sel de platine avec un agent réducteur.

Le sel de platine peut être un sel d'halogénure de platine, éventuellement hydraté, tel que $H_2PtCl_6.6H_2O$.

L'agent réducteur peut être un hydrure métallique, et plus particulièrement un borohydrure métallique, tel que le borohydrure de sodium ($NaBH_4$).

Encore plus spécifiquement, la préparation de particules de platine liées à un matériau carboné peut se dérouler par la mise en œuvre des opérations suivantes :

- une opération de mise en contact d'une solution aqueuse basique (par exemple, à base de carbonate de lithium) d'un sel de platine (par exemple, $H_2PtCl_6$-$H_20$) avec le matériau carboné ;
- une opération d'ajout au mélange résultant de l'opération précédente d'un agent réducteur, à l'issue de laquelle le mélange résultant est agité pendant une durée suffisante jusqu'à obtention d'un mélange comprenant des particules de platine liées au matériau carboné.

Ce mélange peut être traité (par exemple, par filtration), de sorte à isoler les particules de platine obtenues, ces dernières étant destinées à être utilisées pour la mise en œuvre de l'étape c).

Selon un deuxième mode de réalisation, les particules peuvent être utilisées, lors de la mise en œuvre de l'étape c), sous une forme non liée au matériau carboné, ce qui implique, dans ce cas, que le procédé de l'invention comprenne, après l'étape c) une étape de mise en contact des particules obtenues à l'issue de l'étape c) avec le matériau carboné (dite ci-après étape c'), moyennant quoi lesdites particules sont liées à l'issue de cette étape au matériau carboné.

Plus spécifiquement, cette étape de mise en contact avec le matériau carboné peut être réalisée sous ultrasons, de sorte à activer la collision des particules avec le matériau carboné pour former une liaison entre ces particules et le matériau.

Pour le premier mode de réalisation (c'est-à-dire le mode de réalisation, dans lequel les particules sont utilisées déjà liées à un matériau carboné avant la mise en œuvre de l'étape c)), l'étape c) peut être réalisée par les opérations suivantes :

- une opération de mise en dispersion des particules dans un solvant organique électrophile, tel qu'un solvant amine (comme l'hexylamine), ce type de solvant contribuant à assurer une bonne stabilisation de la dispersion, moyennant quoi l'on obtient une dispersion de particules comprenant un matériau apte à catalyser l'oxydation de l'hydrogène ou la réduction de l'oxygène liées à un matériau carboné ;
- une opération de mise en contact de la dispersion susmentionnée avec un polymère tel que défini ci-dessus, de préférence préalablement dissous dans de l'eau ;
- éventuellement, une opération de lavage des particules obtenues, par exemple, par des cycles de précipitation/centrifugation, de sorte à éliminer les traces de composé amorceur n'ayant pas réagi.

Pour le deuxième mode de réalisation (c'est-à-dire le mode de réalisation, pour lequel le procédé de l'invention comprend, après l'étape c), une étape de mise en contact des particules obtenues à l'issue de l'étape c) avec le matériau carboné (dite ci-après étape c'), moyennant quoi lesdites particules sont liées à l'issue de cette étape au matériau carboné), le procédé de l'invention peut comprendre :

- une étape de préparation de particules comprenant un matériau apte à catalyser l'oxydation de l'hydrogène ou la réduction de l'oxygène ;
- une étape c), telle que définie ci-dessus, de mise en contact, dans le milieu de synthèse de l'étape précédente, d'un polymère tel que défini ci-dessus avec les particules obtenues préalablement ;
- une étape de mise en contact des particules issues de l'étape c) avec un matériau carboné, de sorte à obtenir des particules liées à un matériau carboné.

Lorsque les particules sont des particules métalliques, l'étape de préparation de ces dernières peut comprendre une opération de réduction d'un sel métallique en faisant réagir celui-ci avec un agent réducteur, moyennant quoi l'on obtient des particules métalliques.

Par exemple, lorsque les particules métalliques sont des particules de platine, l'étape de réduction consiste à réduire un sel de platine avec un agent réducteur.

Le sel de platine peut être un sel d'halogénure de platine, éventuellement hydraté, tel que $H_2PtCl_6.6H_2O$.

L'agent réducteur peut être un hydrure métallique, et plus particulièrement un borohydrure métallique, tel que le borohydrure de sodium ($NaBH_4$).

La préparation peut être effectuée dans un milieu du type émulsion « huile-dans-eau » (correspondant à la terminologie anglaise « *water-in-oil* »), l'huile pouvant correspondre à un composé hydrocarbure, tel que l'hexane.

D'un point de vue pratique, la préparation de particules de platine dans un tel milieu, avant la mise en contact le composé amorceur puis le matériau carboné, peut se dérouler par la mise en œuvre des opérations suivantes :

- une opération de mise en contact d'un sel de platine (par exemple, $H_2PtCl_6$-$H_20$) préalablement dissous dans de l'eau avec un milieu comprenant une huile et éventuellement un agent dispersant;
- une opération d'ajout au mélange résultant de l'opération précédente d'un agent réducteur, à l'issue de laquelle le mélange résultant est agité pendant une durée suffisante jusqu'à cessation de tout dégagement gazeux (cette cessation indiquant que la réaction de réduction est achevée), moyennant quoi l'on obtient un mélange comprenant des particules de platine.

L'étape c) de mise en contact peut se faire par introduction du polymère en milieu aqueux, de sorte à ne pas perturber le milieu de synthèse des particules.

L'étape de mise en contact avec le matériau carboné peut se faire par introduction de celui-ci directement dans le milieu de synthèse et soumission du mélange résultant à un traitement aux ultrasons, de sorte à engendrer la liaison du matériau carboné aux particules.

Ce mode de réalisation permet de réaliser une synthèse monotope de particules liées à un matériau carboné et greffées à des polymères tels que définis ci-dessus *via* des restes de composé amorceur d'une polymérisation ATRP.

Selon un troisième mode de réalisation, le procédé de l'invention comprend une étape de préparation des particules en un matériau apte à catalyser la réduction de l'oxygène ou l'oxydation de l'hydrogène liées à un matériau carboné, cette étape étant réalisée de façon concomitante à l'étape c).

Dans ce cas, lorsque les particules sont des particules métalliques, la préparation de ces dernières réalisées concomitamment à l'étape c) comprend :

- une étape de mise en contact d'un sel métallique, d'un matériau carboné, en milieu basique, avec un polymère tel que défini ci-dessus à l'étape a) ;
- une étape d'ajout au mélange résultant de l'étape précédente d'un agent réducteur, moyennant quoi il résulte des particules conformes à l'invention, à savoir des particules métalliques liées à un matériau carboné et à des polymères tels que définies ci-dessus ;
- éventuellement une étape d'isolement des particules ainsi obtenues.

Par exemple, lorsque les particules sont des particules de platine, la préparation de ces dernières réalisées concomitamment à l'étape c) comprend :

- une étape de mise en contact d'un sel de platine (par exemple, $H_2PtCl_6$-$H_20$), d'un matériau carboné (tel que du noir de carbone) avec une solution aqueuse basique (par exemple, à base de carbonate de lithium) et avec un polymère tel que défini pour l'étape a) ;
- une étape d'ajout au mélange résultant de l'étape précédente d'un agent réducteur, à l'issue de laquelle le mélange résultant est agité pendant une durée suffisante jusqu'à obtention d'un mélange final comprenant des particules de platine liées au matériau carboné et au polymère susmentionné.

Quel que soit le mode de réalisation engagé, le taux de greffage de polymère(s) (exprimé en pourcentage massique de polymère dans les particules) peut aller de 1 à 25% massique.

Les particules susceptibles d'être obtenues par le procédé de l'invention, sont des particules comprenant un matériau apte à catalyser la réduction de l'oxygène ou l'oxydation de l'hydrogène, lesdites particules étant greffées par des greffons de formule (III) suivante :

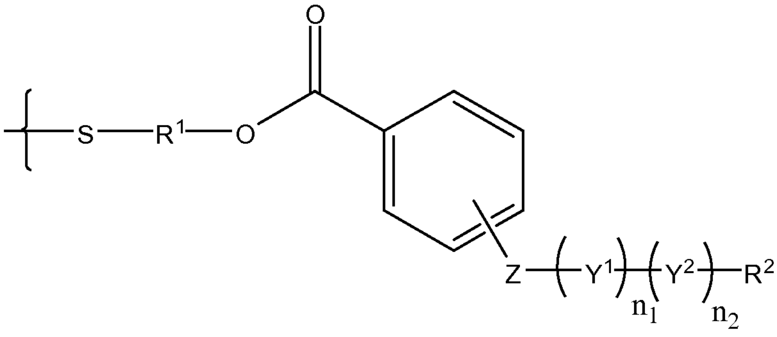

(III)

l'accolade indiquant l'endroit par lequel les greffons sont liés, de manière covalente, aux particules et les $R^1$, $R^2$, Z, $Y^2$, $n_1$ et $n_2$ étant tels que définis ci-dessus et $Y^1$ est un motif répétitif styrénique fluoré porteur d'au moins un groupe conducteur de protons, éventuellement sous forme d'un sel, le groupe $-Z-(Y^1)_{n1}-(Y^2)_{n2}-R^2$, qui entrecoupe une liaison carbone-carbone du groupe phényle, signifiant qu'il peut être lié à l'un quelconque des atomes de carbone du groupe phényle.

Les déclinaisons fournies ci-dessus pour les définitions de $R^1$, Z, $Y^1$, $Y^2$, $R^2$, $n_1$ et $n_2$ dans le cadre de la description du procédé peuvent être reprises pour la définition des particules de l'invention.

En particulier, les groupes $R^1$ peuvent être identiques entre eux, de même que les groupes Z peuvent être identiques entre eux et les groupes $R^2$ peuvent être identiques entre eux. Plus spécifiquement, $R^1$ et Z représentent un groupe alkylène et $R^2$ un atome d'halogène, tel que du chlore.

Le groupe $-Z-(Y^1)_{n1}-(Y^2)_{n2}-R^2$ peut être également en position *para* par rapport au groupe -CO-O-.

$Y^1$ peut représenter un motif répétitif de formule (XIV) suivante :

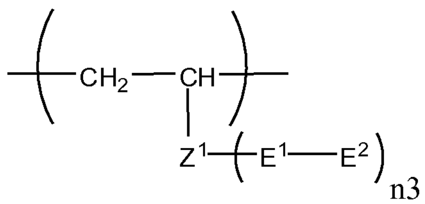

(XIV)

avec $Z^1$, $E^1$, $E^2$ et $n_3$ étant tels que définis ci-dessus ;
et plus spécifiquement, un motif répétitif de formule (XV) suivante :

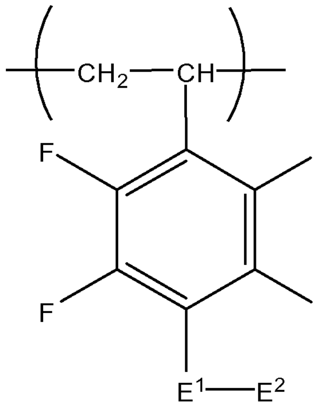

(XV)

avec $E^1$ et $E^2$ étant tels que définis ci-dessus ;
et encore, plus spécifiquement, un motif répétitif répondant à l'une des formules (XVI) à (XVIII) suivantes :

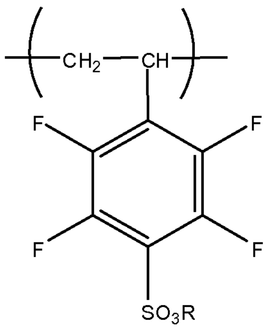

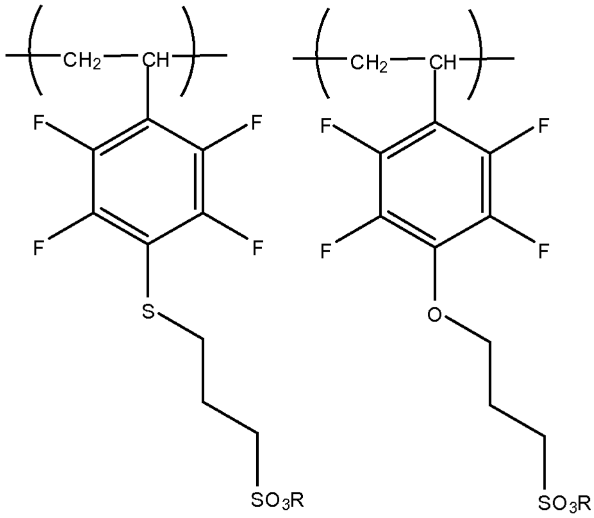

(XVI) (XVII) (XVIII)

avec R étant tel que défini ci-dessus.

Lorsque $Y^2$ existe, $Y^2$ peut représenter un motif répétitif issu de la polymérisation d'un monomère styrénique de formule (XII) ou (XIII) susmentionnée, tel qu'un monomère styrènesulfonate de sodium, et plus spécifiquement, un motif répétitif répondant à l'une des formules (XIX) et (XX) suivantes :

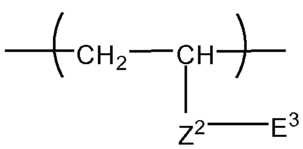

(XIX)

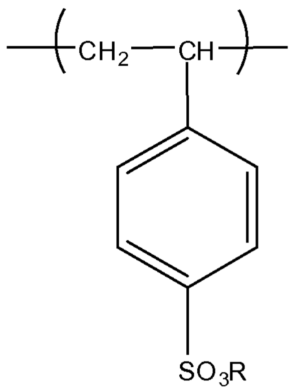

(XX)

avec $Z^2$, $E^3$ et R étant tels que définis ci-dessus.

Les particules peuvent être, en particulier, des particules en platine.

En particulier, $n_2$ peut être égal à 0, auquel cas les particules sont greffées par des greffons de formule (XXI) suivante :

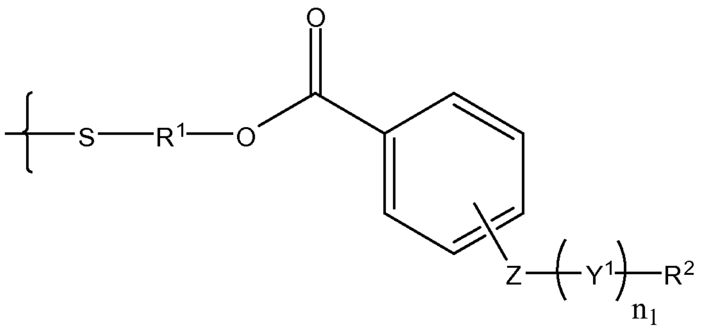

(XXI)

avec $R^1$, Z, $Y^1$, $R^2$ et $n_1$ étant tels que définis ci-dessus.

Des particules spécifiques conformes à l'invention peuvent être des particules, par exemple, de platine, greffées par des greffons de formules suivantes :

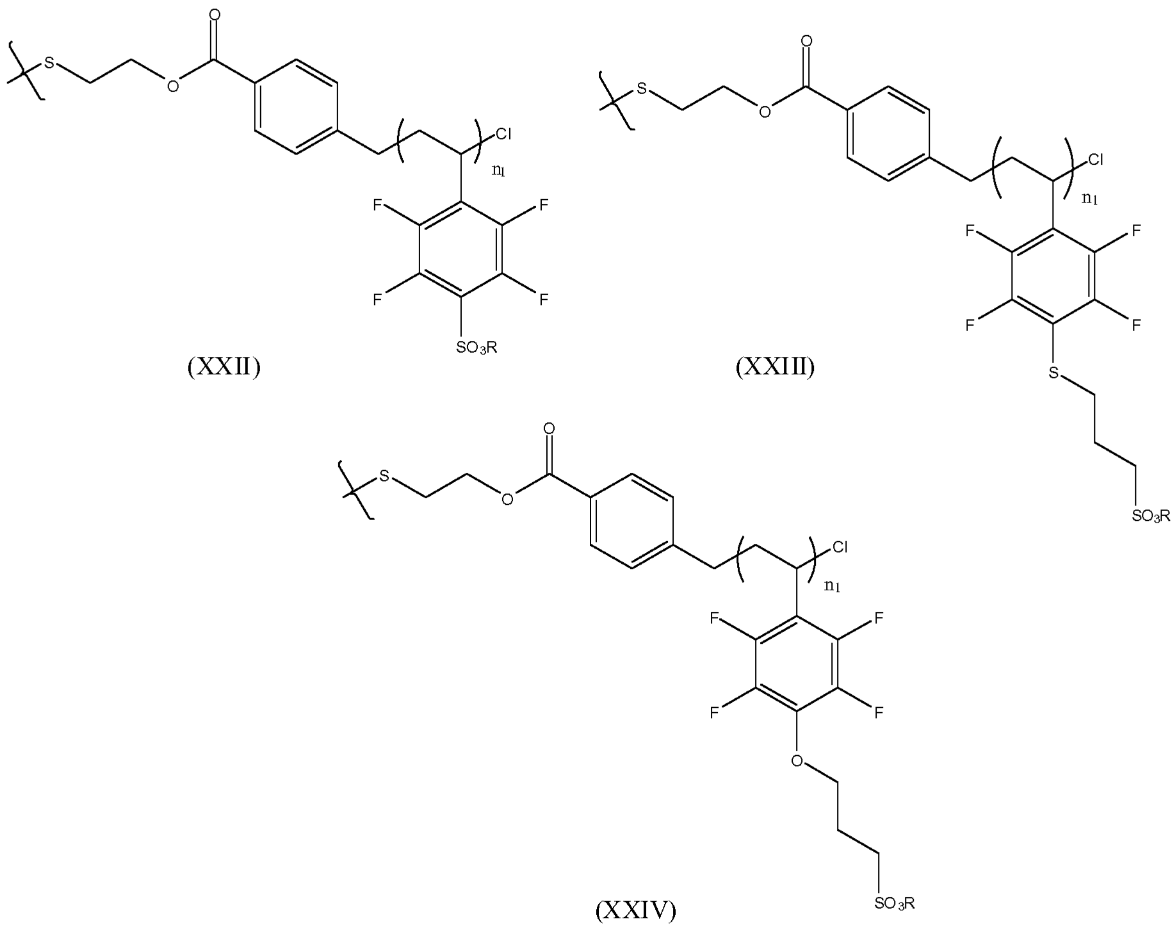

(XXII) (XXIII) (XXIV)

avec R et $n_1$ étant tel que défini ci-dessus.

L'accolade indique l'endroit par lequel les greffons sont liés aux particules.

Les particules peuvent être, en outre, liées de façon covalente, à un matériau carboné.

De telles particules sont particulièrement intéressantes, car elles permettent de transposer la phénoménologie du point triple à l'échelle moléculaire, le rôle du catalyseur étant rempli par le matériau constitutif de la particule en tant que telle, le rôle du conducteur protonique étant rempli par les polymères susmentionnés et le rôle du conducteur électronique étant rempli par le matériau carboné. Les liaisons covalentes entre le conducteur électronique et le catalyseur d'une part et entre le matériau conducteur protonique et le catalyseur d'autre part assurent, premièrement, un meilleur transfert des charges (respectivement, électrons et protons) et donc de meilleures performances et, deuxièmement,

une parfaite stabilité en conditions de fonctionnement en pile, lorsque ces particules sont utilisées dans des piles. Ces deux résultats permettent de réduire le taux de chargement en catalyseur pour des performances accrues.

Comme déjà mentionné pour le procédé, les particules comprenant un matériau apte à catalyser la réduction de l'oxygène ou l'oxydation de l'hydrogène peuvent être des particules métalliques, à savoir des particules comprenant un ou plusieurs éléments métalliques (auquel cas, lorsqu'il y a plusieurs éléments métalliques, on pourra parler de particules en alliage(s) métallique(s).

Des particules métalliques particulièrement appropriées peuvent être des particules comprenant un métal noble, tel que le platine, le ruthénium, le palladium et des mélanges de ceux-ci.

Lorsque les particules obtenues selon l'invention sont destinées à être utilisées dans des piles PEMFC, les particules métalliques sont avantageusement des particules en platine.

Quant au matériau carboné, lorsqu'il est présent, il peut être du graphite, du noir de carbone, des fibres de carbone, des tubes de carbone (tels que des nanotubes de carbone), du graphène.

Le rapport entre matériau carbone et platine peut être compris entre 80/20 et 20/80, idéalement entre 45/55 et 65/35.

Les particules de l'invention peuvent entrer dans la constitution d'électrodes de piles à combustible, en particulier de piles à combustibles du type PEMFC, plus particulièrement dans des couches catalytiques d'électrodes de piles à combustible.

Ainsi, l'invention a également trait à des électrodes comprenant de telles particules et à des piles à combustibles comprenant au moins un assemblage électrode-membrane-électrode, dans lequel au moins une de ses électrodes est une électrode conforme à l'invention.

Ces particules sont dispersables dans une solution alcoolique. Il est dès lors possible de les mélanger à un ionomère conducteur protonique dans des proportions allant de 100/0 à 70/30. La solution peut alors être déposée sur tout type de support poreux carboné (tissu ou feutre) et utilisé comme électrode de pile à combustible.

Qui plus est, les particules de l'invention, une fois incorporées dans des piles à combustible, permettent d'obtenir une amélioration des propriétés, telles que les performances à fortes densités de courant.

Par ailleurs, ces particules présentent une activité électrocatalytique même lorsqu'elles sont mises en œuvre sans ionomère de type Nafion®. Ce résultat particulièrement remarquable permet de réaliser des électrodes sans Nafion®. Associées à des membranes alternatives au Nafion®, ces particules permettront de réaliser des assemblages membrane/électrode libre de tout Nafion®.

Ainsi, les piles à combustible, par exemple du type PEMFC, comprennent, classiquement, au moins un assemblage électrode-membrane-électrode, dans lequel au moins une de ses électrodes est à base de particules conformes à l'invention.

La membrane quant à elle peut être à base d'un matériau polymérique conducteur de protons, le ou les polymères constitutifs de ce matériau pouvant être de même nature que le ou les polymères greffés à la surface desdites particules.

Les polymères utilisés pour greffer les particules de l'invention sont nouveaux et répondent à la formule (III) suivante :

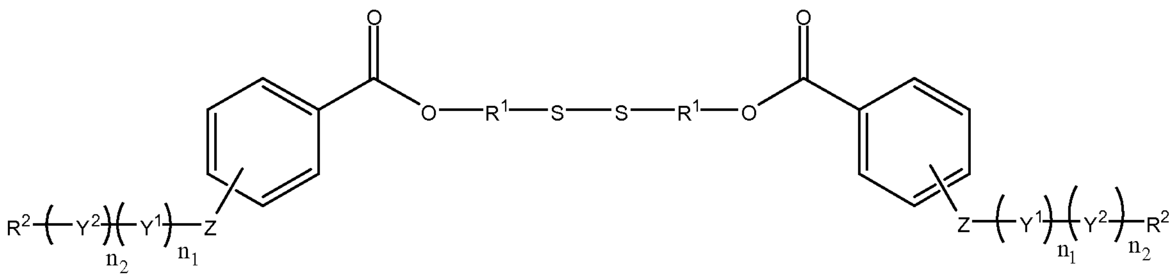

(III)

dans laquelle :

- $Y^1$ correspond au motif répétitif issu de la polymérisation d'un monomère styrénique fluoré, éventuellement porteur d'au moins un groupe conducteur de protons, éventuellement sous forme d'un sel et $n_1$ au nombre de répétition du motif répétitif pris entre parenthèses, ce nombre de répétition étant un entier positif au moins égal à 2 ;
- $Y^2$ correspond au motif répétitif issu de la polymérisation d'un monomère styrénique non fluoré porteur d'au moins un groupe conducteur de protons, éventuellement sous forme d'un sel, et $n_2$ au nombre de répétition du motif répétitif pris entre parenthèses, ce nombre de répétition étant égal à 0 ou étant un entier positif au moins égal à 2 ;

- $R^1$, $R^2$ et Z étant tels que définis ci-dessus.

Les déclinaisons fournies ci-dessus pour les définitions de $R^1$, Z, $Y^1$, $Y^2$, $R^2$, $n_1$ et $n_2$ peuvent être reprises pour la définition des polymères de l'invention.

En particulier, les groupes $R^1$ peuvent être identiques entre eux, de même que les groupes Z peuvent être identiques entre eux et les groupes $R^2$ peuvent être identiques entre eux. Plus spécifiquement, $R^1$ et Z représentent un groupe alkylène et $R^2$ un atome d'halogène, tel que du chlore.

Le groupe $-Z-(Y^1)_{n1}-(Y^2)_{n2}-R^2$ peut être également en position *para* par rapport au groupe -CO-O-.

$Y^1$ peut représenter un motif répétitif de formule (XIV) suivante :

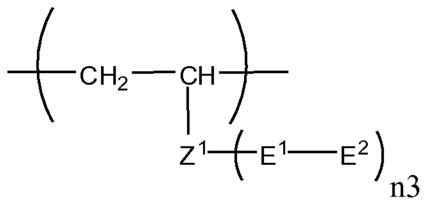

(XIV)

avec $Z^1$, $E^1$, $E^2$ et $n_3$ étant tels que définis ci-dessus ;
et plus spécifiquement, un motif répétitif de formule (XV) suivante :

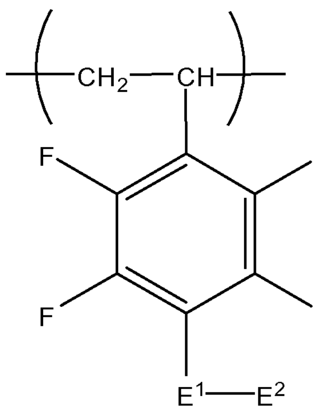

(XV)

avec $E^1$ et $E^2$ étant tels que définis ci-dessus ;
et encore, plus spécifiquement, un motif répétitif répondant à l'une des formules (XVI) à (XVIII) suivantes :

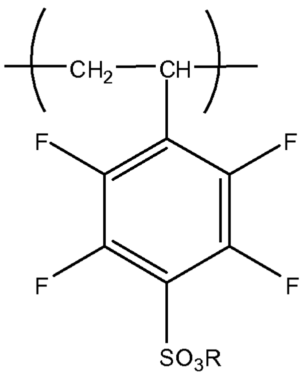

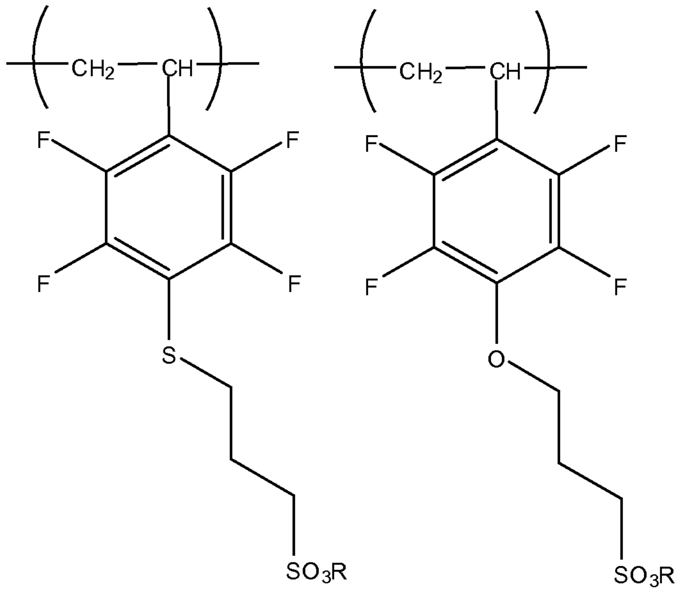

(XVI) (XVII) (XVIII)

avec R étant tel que défini ci-dessus.

Lorsque $Y^2$ existe, $Y^2$ peut représenter un motif répétitif issu de la polymérisation d'un monomère styrénique de formule (XII) ou (XIII) susmentionnée, tel qu'un monomère styrènesulfonate de sodium.

A titre d'exemples, le motif répétitif $Y^2$ peut répondre à l'une des formules (XIX) et (XX) suivantes :

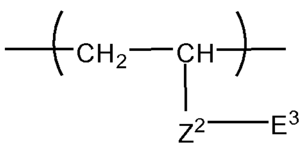

(XIX)

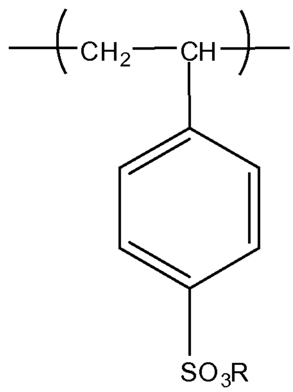

(XX)

avec $Z^2$, $E^3$ et R étant tels que définis ci-dessus.

En particulier, $n_2$ peut être égal à 0, auquel le polymère répondra ainsi à la formule (XXI) suivante :

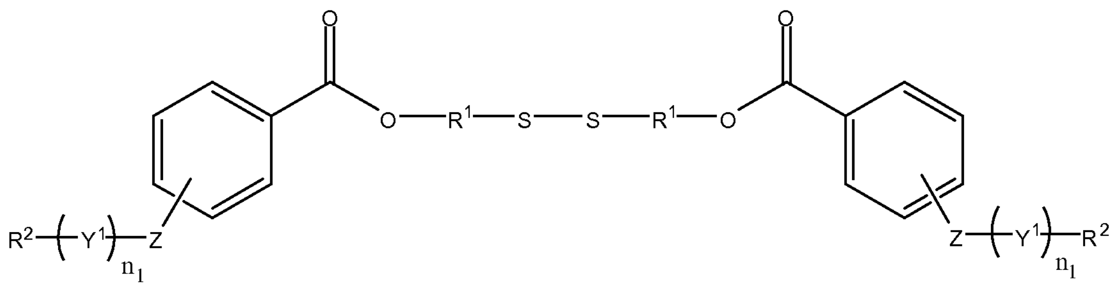

(XXI)

Des polymères spécifiques conformes à l'invention peuvent être des polymères de formule (XXII) suivante :

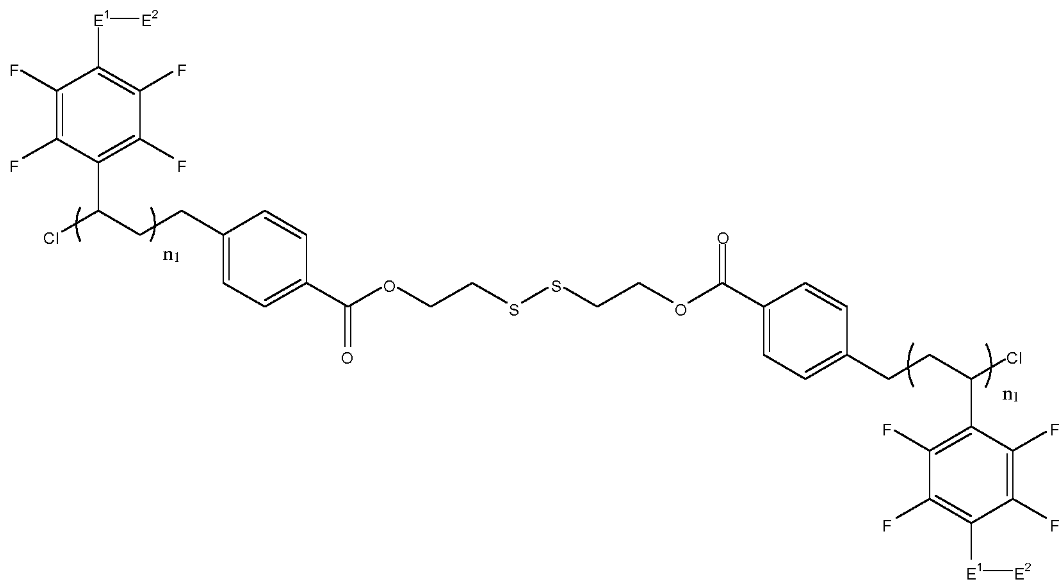

(XXII)

dans laquelle $n_1$, $E^1$ et $E^2$ sont tels que définis ci-dessus.

De manière encore plus spécifique, des polymères conformes à l'invention peuvent répondre à l'une des formules (XXIII) à (XXV) suivantes :

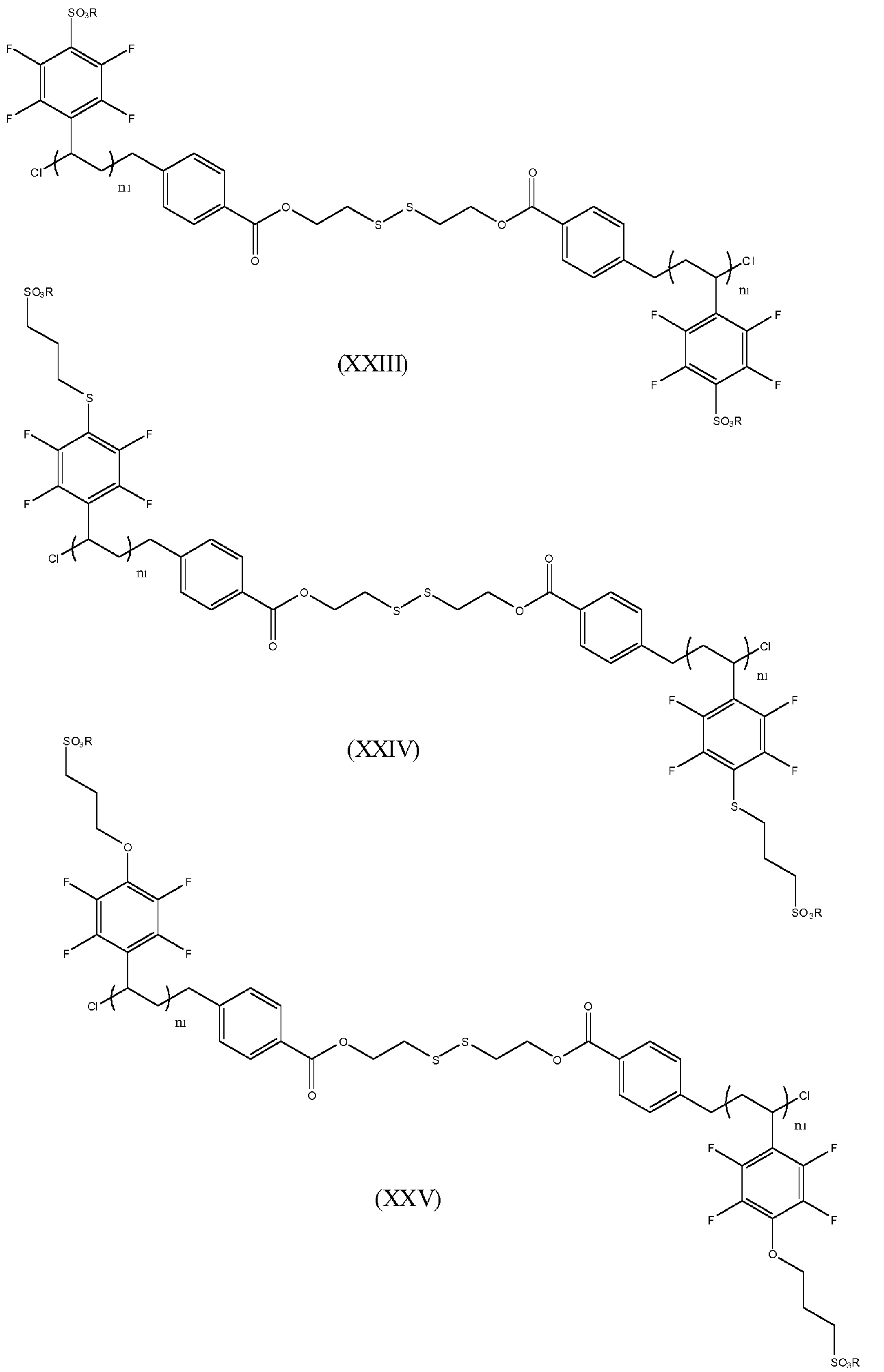

(XXIII)

(XXIV)

(XXV)

avec R et $n_1$ étant tels que définis ci-dessus.

L'invention va être à présent décrite, par rapport aux exemples suivants donnés à titre illustratif et non limitatif.

## BREVE DESCRIPTION DES FIGURES

La figure 1 est une courbe de polarisation illustrant l'évolution de la tension E (en V) en fonction de la densité de courant D (en A/$cm^2$).

La figure 2 représente des courbes d'évolution de la tension E (en V) en fonction de la densité de courant D (en A/$cm^2$) (courbe a' pour la Pile 1, courbe b' pour la Pile 2 et courbe c' pour la Pile 3).

La figure 3 représente des courbes d'évolution de la tension E (en V) en fonction du temps T (en heure) (courbe a' pour la Pile 1, courbe b' pour la Pile 2 et courbe c' pour la Pile 3).

## EXPOSÉ DÉTAILLÉ DE MODES DE RÉALISATION PARTICULIERS

EXEMPLE 1

Cet exemple illustre la préparation de particules de platine liées à un matériau carboné du type noir de carbone (dénommé, dans la formule ci-dessous "Vulcan XC72") selon le schéma réactionnel suivant:

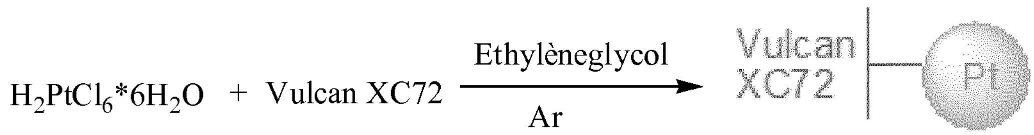


Dans un premier temps, le sel $H_2PtCl_6$*$6H_2O$ (267 mg) est dissous dans 100 mL d'éthylèneglycol. Le pH est alors d'environ 0,8. Il est ajusté à 11 par ajout d'une solution d'hydroxyde de sodium dans de l'éthylèneglycol.

Le carbone préalablement finement broyé (Vulcan XC72; 0,145 mg) est ensuite à la solution préparée ci-dessus et le mélange résultant est placé sous ultrasons jusqu'à dispersion totale du carbone.

Le mélange est ensuite chauffé par irradiation micro-ondes et sous atmosphère inerte d'azote (temps de montée en température 5 minutes, 5 minutes à 100°C, Puissance de 1600 W et pulse à 80%).

Le pH obtenu à la fin de la synthèse est égal à 11 à une température de 18°C. Ce pH est ajusté à 2 par ajout d'une solution d'acide chlorhydrique puis 50 mL d'eau milliQ sont ajoutés pour homogénéiser le mélange. La solution est ensuite placée sous ultrasons pendant 5 minutes.

Les particules obtenues sont isolées par ultrafiltration puis rincées abondamment à l'eau milliQ puis séchées à 60°C à l'étuve avant d'être traitées thermiquement à 200°C pendant 2 heures à l'étuve.

EXEMPLE 2

Cet exemple illustre la préparation d'un polymère par polymérisation ATRP avec un amorceur ATRP spécifique pouvant être schématisé par la formule suivante ci-dessous :

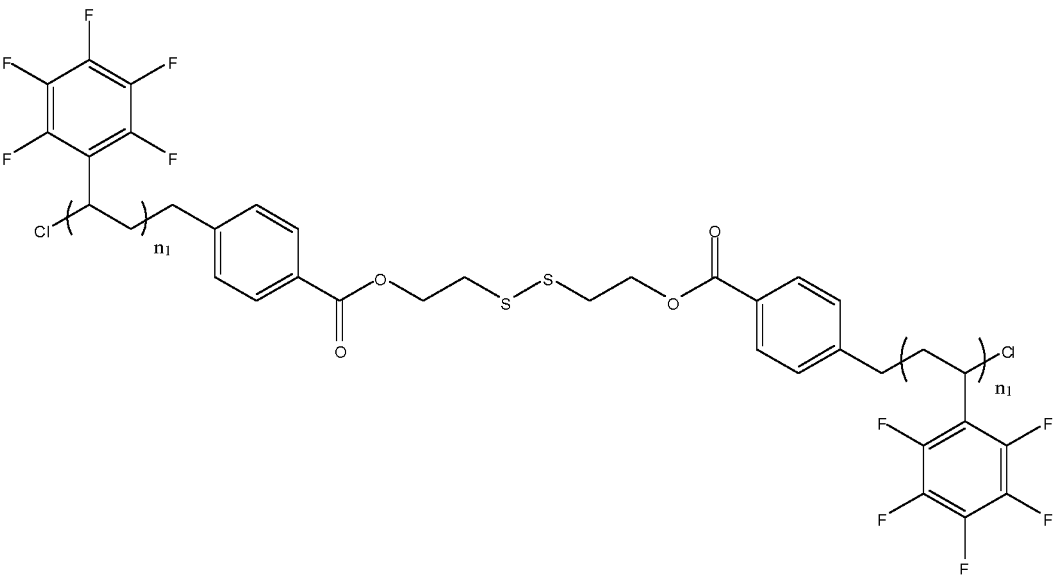

avec $n_1$ correspondant au nombre de répétition du motif pris entre parenthèses, le schéma réactionnel de la polymérisation étant le suivant :

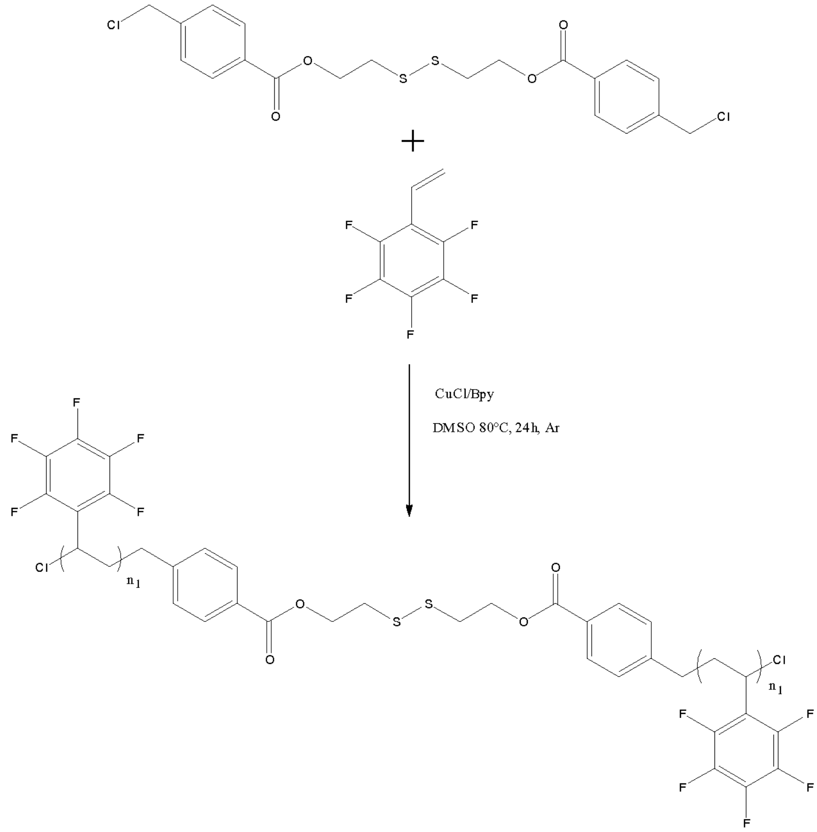


Deux essais (dits Essai 1 et Essai 2) ont été réalisés avec des quantités différentes pour le monomère, les autres ingrédients étant utilisés selon les mêmes quantités pour les deux essais.

Pour ce faire, dans un premier temps, un bicol de 50 mL est soumis à un traitement thermique sous vide comprenant 3 cycles avec une phase de chauffage et une phase de refroidissement à température ambiante.

Puis du diméthylsulfoxyde (DMSO) dégazé sous vide en faisant buller de l'argon (15 minutes) est introduit dans le bicol. Du 2,3,4,5,6-pentafluorostyrène (6,7 mL, 1000 éq. pour l'Essai 1 et 16,8 mL, 2500 éq. pour l'Essai 2) et l'amorceur ARTP (23 mg, 0,1 mmol, 1 éq.) sont introduits sous flux d'argon et l'argon est remis à buller sous vide.

Lorsque l'amorceur est parfaitement dissous dans le mélange réactionnel, de la bipyridine (58 mg, 8 éq.) et du chlorure de cuivre (19 mg, 4 éq.) sont introduits sous flux d'argon. Trois cycles vide-argon sont enfin effectués.

Puis le bicol est mis en place dans un bain d'huile préalablement chauffé à 80°C. Après environ 5 heures de polymérisation, la réaction est stoppée par mise à l'air du système. La solution passe d'une couleur marron à une couleur verte-bleue.

Le polymère est enfin précipité dans de l'isopropanol et est récupéré sous forme d'un solide blanc pégueux avant séchage.

Le polymère est séché pendant une nuit à l'étuve à 60°C.

Le polymère résultant correspond au produit attendu de formule ci-dessus selon les analyses RMN $^1H$ et RMN $^{19}F$, dont les résultats figurent ci-dessous.

**RMN $^1$H** (300, 13 MHz, THF-d8, 6=**1,73 ppm**) $\delta$: 2,9 (s large, CH); 2 (s large, $CH_2$ du motif du répétition)

**RMN $^{19}$F** (282,40 MHz, THF-d8, ppm): -143 (m, F *ortho),* -157 (m, *para*); -164 (m, *meta*)

L'analyse RMN $^1H$ démontre également que le taux de conversion des monomères est compris entre 60 et 70%.

La chromatographie d'exclusion stérique dans du tétrahydrofurane a permis de déterminer les masses molaires en nombre (Mn) et en masse (Mw), les indices de polydispersité (Ip). Les résultats figurent dans le tableau ci-dessous (la première ligne étant pour l'Essai 1 et la deuxième ligne étant pour l'Essai 2).

| **$DP_{n\ théorique}$** | **$M_{n\ théorique}$** | Conversion [a] | **$M_{n\ expérimentale}$** [b] | **$M_{w\ expérimentale}$** [b] | **$I_p$** |
|---|---|---|---|---|---|
| 1000 | 194 600 | 68 | 132 300 | 158 800 | 1,20 |
| 2500 | 485 700 | 63 | 306 000 | 385 600 | 1,26 |
| [a] **calculée par RMN** $^1$H; Calculée par analyse SEC dans le THF | | | | | |

EXEMPLE 3

Cet exemple illustre la préparation d'un polymère sulfuré obtenu par sulfuration des polymères obtenus aux Essais 1 et 2 de l'exemple 2.

Le schéma réactionnel est le suivant:

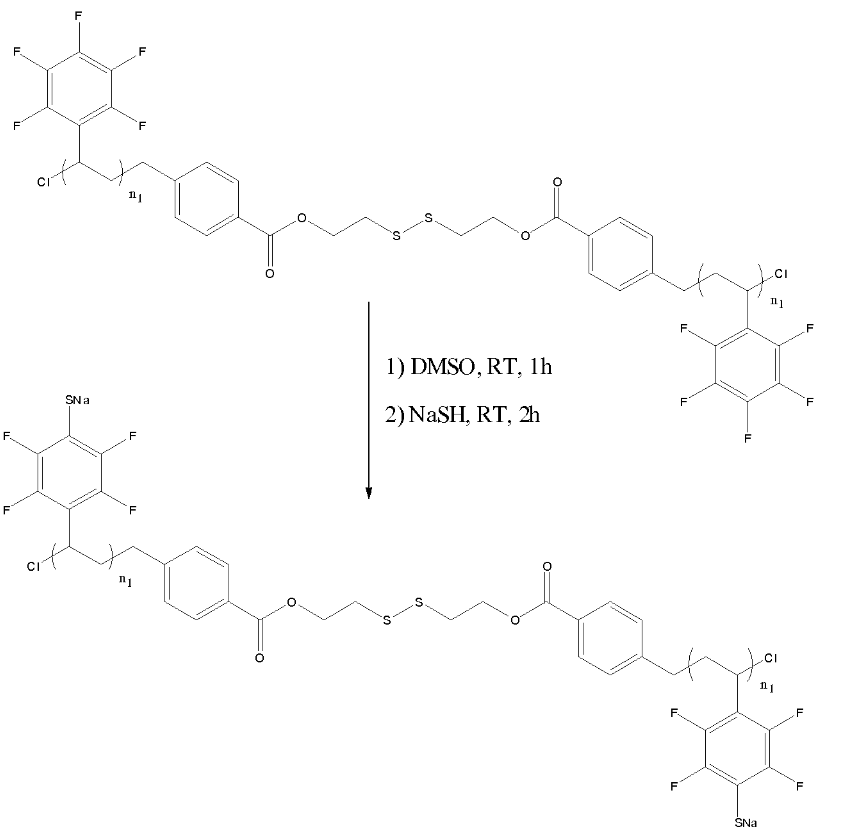

Dans un ballon de 25 mL, le polymère obtenu à l'exemple 2 (2 g) est dispersé dans du diméthylsulfoxyde (DMSO) (20 mL) à température ambiante (RT) pendant 1 heure. Puis de l'hydrogénosulfate de sodium hydraté (1, 2 éq. par rapport au nombre de moles d'unités monomères) est introduit petit à petit dans le ballon à température ambiante (RT). On observe un changement de couleur du jaune pâle au bleu puis une disparition de la coloration bleue. Le mélange réactionnel passe à l'issue de 30 minutes par une couleur bleu puis, en fin de réaction (au bout de 2 heures), le milieu constitue un système homogène de couleur bleue et présentant une viscosité importante.

Le mélange brut réactionnel est dilué dans de l'eau et est précipité 2 fois dans de l'isopropanol.

Le polymère résultant est un solide jaune, qui est séché à l'étuve à 60°C pendant une nuit.

Le polymère résultant correspond au produit attendu de formule ci-dessus selon les analyses RMN $^{19}F$, dont les résultats figurent ci-dessous.

**RMN $^{19}$F** (282,40 MHz, $D_2O$): -138 (m, F *méta*), -151 (m, F *ortho)*

Ils témoignent, notamment, de la disparition du signal relatif au fluor en position *para,* cette position étant désormais occupée par un groupe -SNa.

EXEMPLE 4

Cet exemple illustre la préparation d'un polymère sulfoné obtenu par sulfonation du polymère obtenu à l'exemple 3.

Le schéma réactionnel est le suivant:

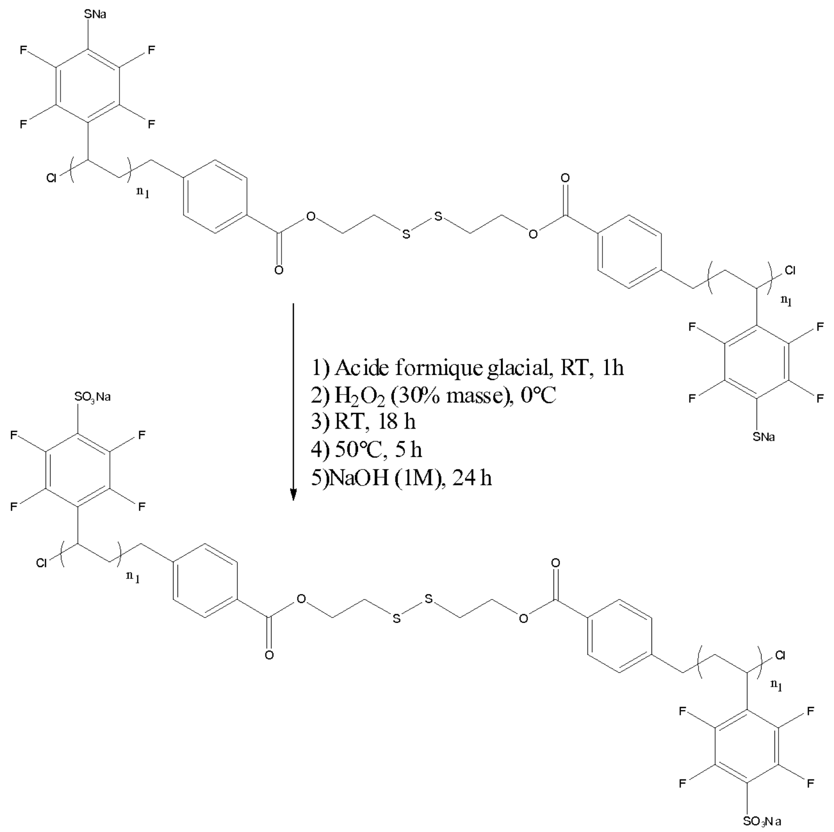


Dans un ballon de 100 mL, le polymère obtenu à l'exemple (2 g) est mis en suspension de l'acide formique pendant 30 minutes. Le ballon est ensuite placé dans un bain de glace. Après 15 minutes, du peroxyde d'hydrogène (2 éq. par rapport au nombre d'unités monomères) est introduit goutte à goutte. Le mélange est ensuite placé à température ambiante pendant 18 heures puis à reflux pendant 5 heures.

Le polymère est précipité dans l'isopropanol puis est ajouté dans une solution aqueuse d'hydroxyde de sodium (1 M). Le mélange est ensuite agité pendant 24 heures. Le polymère est filtré et rincé avec de l'isopropanol. Le polymère est placé à l'étuve à 60°C pendant une nuit.

Le polymère résultant correspond au produit attendu de formule ci-dessus selon les analyses IR et RMN $^{19}F$, dont les résultats figurent ci-dessous.

**IR** ($cm^{-1}$) : 1160 et 1025 (signaux correspondant au groupe O=S=O)

**RMN $^{19}$F** (282,40 MHz, $D_2O$): -138 (m, F *méta*), -142 (m, F *ortho)*

EXEMPLE 5

Cet exemple illustre la préparation d'un polymère sulfoné comportant un groupe espaceur organique soufré obtenu par sulfonation selon le schéma réactionnel suivant:

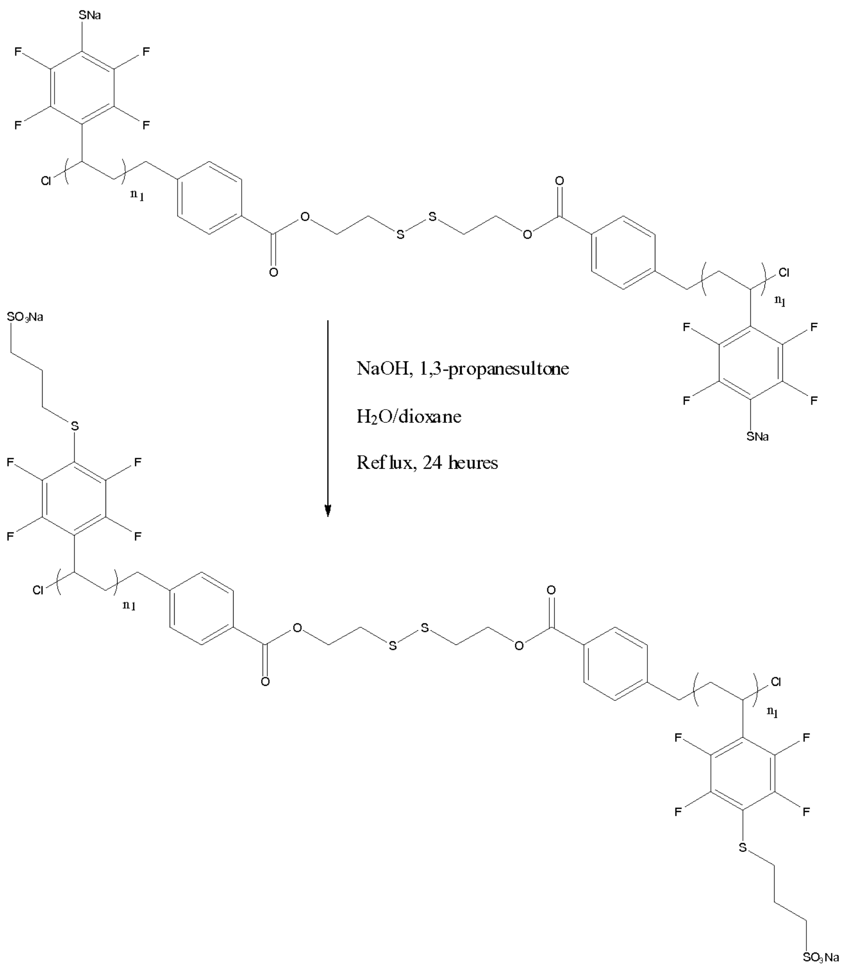


Dans un ballon de 25 mL, le polymère obtenu à l'exemple 3 (2 g) est mis en suspension dans de la soude à 1M à température ambiante pendant 1 heure. Du 1,3-propanesultone (1,2 éq. par rapport au nombre de moles d'unités monomères) est dilué dans du dioxane puis introduit goutte à goutte à témpérature ambiante. Le mélange est ensuite mis au reflux pendant 24 heures.

Le mélange est filtré et lavé à l'eau. On obtient un gel incolore.

Le polymère obtenu est séché à l'étuve à 60°C pendant une nuit.

Le polymère résultant correspond au produit attendu de formule ci-dessus selon les analyses RMN $^{19}$F, dont les résultats figurent ci-dessous.

**RMN $^{19}$F** (282,40 MHz, $D_2O$, ppm): -150 (m, F *méta*), -164 (m, F *ortho).*

EXEMPLE 6

Cet exemple illustre la préparation d'un polymère sulfoné comportant un groupe espaceur organique oxygéné obtenu par polymérisation ATRP d'un monomère spécifique selon le schéma réactionnel suivant:

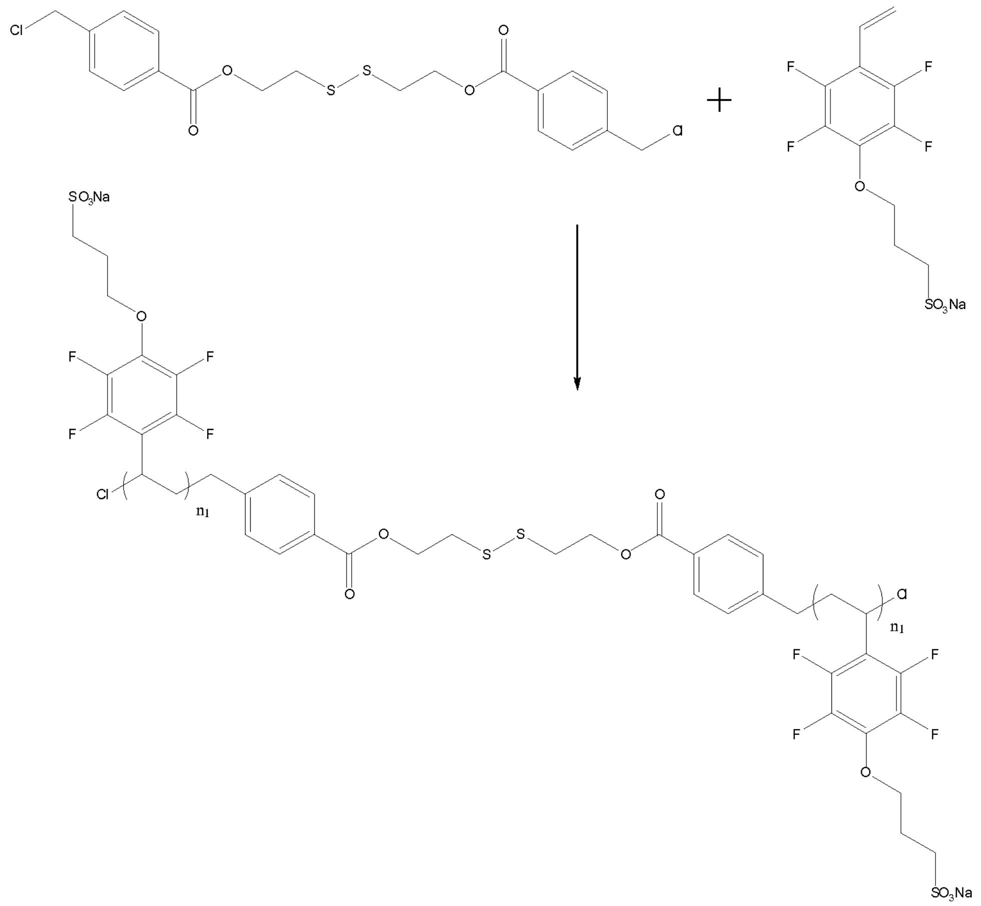

Pour ce faire, il est procédé, dans un premier temps, à la préparation du monomère spécifique: le 3-(2,3,5,6-tétrafluoro-4-vinylphénoxy)propane-1-sulfonate de sodium (étape a) puis la polymérisation du monomère avec un amorceur ATRP.

a) Synthèse du 3-(2,3,5,6-tétrafluoro-4-vinylphénoxy)propane-1-sulfonate de sodium

Cette étape illustre la synthèse du monomère 3-(2,3,5,6-tétrafluoro-4-vinylphénoxy)propane-1-sulfonate de sodium de formule suivante:

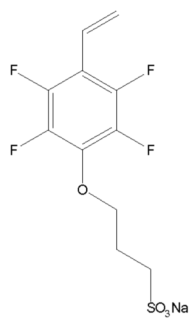

Pour ce faire, du tétratluorostyréne hydroxylé (le groupe -OH étant en position *para* par rapport au groupe éthylénique) (1,5 g, 5 mmol, 1 éq.) est dissous dans du méthanol puis de l'hydroxyde de sodium (10 mmol, 2 éq.) est introduit. Le mélange est placé sous agitation magnétique à température ambiante jusqu'à dissolution complète de la base. Une solution de 1,3-propanesultone (0,73 g, 6 mmol, 1,2 éq.) dans du dioxane est introduite goutte à goutte. Le mélange est agité à température ambiante pendant une heure puis placé au reflux pendant 24 heures. Les solvants sont éliminés par évaporation rotative et le résidu est lavé avec du dichlorométhane à trois reprises. Le produit est ensuite recristallisé deux fois dans un mélange méthanol/eau (2:1).

Le monomère résultant correspond au produit attendu de formule ci-dessus selon les analyses IR, RMN $^{19}$**F** et RMN $^{1}$H, dont les résultats figurent ci-dessous.
**IR** ($cm^{-1}$) : 1183 et 1060 (signaux correspondant au groupe O=S=O)
**RMN** $^{19}$**F** (282,40 MHz, $D_2O$, ppm): -145 (2F, m, F *méta*), -160 (2F, m, F *ortho)*
**RMN** $^{1}$**H** (300,13 MHz, DMSO-d6, 6=4,75 ppm): 6,68 (dd, 1H, CH alcénique), 5,80 (dd, 2H, $CH_2$ alcénique), 4,42 (t, 2H, O-$\underline{CH_2}$-$CH_2$-$CH_2$-$SO_3$Na), 3,14 (t, 2H, O-$CH_2$-$CH_2$-$\underline{CH_2}$-$SO_3$Na), 2,22 (m, 2H, -$CH_2$-$\underline{CH_2}$-$CH_2$-$SO_3$Na).

b) Polymérisation du 3-(2,3,5,6-tétrafluoro-4-vinylphénoxy)propane-1-sulfonate de sodium

Pour ce faire, dans un premier temps, un bicol de 100 mL est soumis à un traitement thermique sous vide comprenant 3 cycles avec une phase de chauffage et une phase de refroidissement à température ambiante.
Puis de l'eau MilliQ dégazée sous vide en faisant buller de l'argon (15 minutes) est introduite dans le bicol. Du 3-(2,3,5,6-tétrafluoro-4-vinylphénoxy)propane-1-sulfonate de sodium (2500 éq.) est introduit sous flux d'argon et l'argon est remis à buller sous vide.
En parallèle, dans un ballon piriforme de 25 mL, du méthanol (16 mL) est dégazé sous vide en faisant buller l'argon (15 minutes) et l'amorceur ATRP (1 éq.) est ensuite introduit sous flux d'argon.
Lorsque le monomère est parfaitement dissous dans l'eau, de la bipyridine (116 mg) et du chlorure de cuivre (37 mg) sont introduits sous flux d'argon.
De l'argon est mis à buller dans le système tout en tirant sous vide.
La solution d'amorceur dans le méthanol est introduite avec une seringue (20 mL, en faisant attention de bien conditionner la seringue sous argon) tout en gardant un flux d'argon. Trois cycles vide-argon sont enfin effectués.
Le bicol est mis en place dans un bain d'huile préalablement chauffé à 45°C. Après environ 21 heures de polymérisation, la réaction est stoppée par mise à l'air du système. La solution passe d'une couleur marron à une couleur verte-bleue.
Le mélange est filtré sur gel de silice, afin d'éliminer les ions cuivre II ($Cu^{2+}$) contenus dans le système catalytique et piégés par le polymère.
Le polymère est enfin précipité dans du méthanol froid et est récupéré sous forme d'un solide blanc pégueux avant séchage.
Le polymère est ensuite placé à l'étuve à 65°C pendant 1 nuit.
Le polymère résultant correspond au produit attendu de formule ci-dessus selon les analyses IR et RMN $^{19}$F, dont les résultats figurent ci-dessous.
**RMN** $^{19}$**F** (282,40 MHz, $D_2O$, ppm): -150 (m, F en *méta*), -165 (m, F en *ortho*)
**IR** ($cm^{-1}$) : 1183 et 1040 (signaux correspondant au groupe O=S=O)

EXEMPLE 7

Cet exemple illustre la préparation de particules de platine préparées selon l'exemple 1 greffées par le polymère préparé à l'exemple 5, ces particules étant ainsi greffées par des greffons de formule suivante:

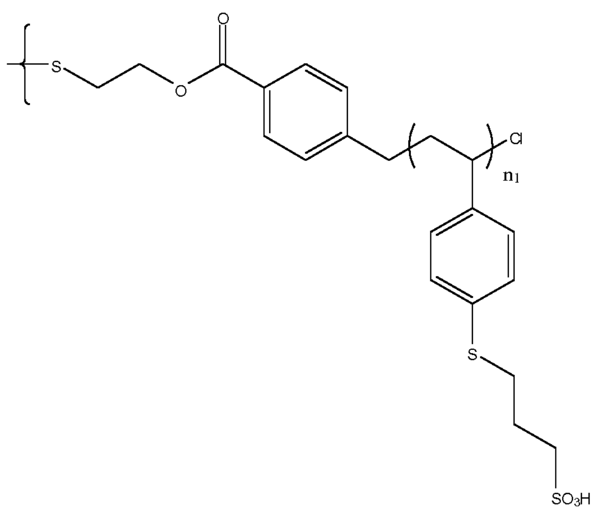

$n_1$ indiquant le nombre de répétition du motif pris entre parenthèses.

Pour ce faire, dans un ballon de 25 mL, sont introduites les particules préparées à l'exemple 1 (100 mg) et de l'hexylamine (10 mL). Le ballon est placé 15 minutes dans un bain à ultrasons, afin que la suspension de particules soit homogène. Le polymère obtenu à l'exemple 5 (2 mg) est mis en solution dans un mélange eau/hexylamine (50/50 en volume) puis est introduit dans le ballon. L'ensemble est placé sous agitation magnétique pendant 12 heures.
Les particules de platine fonctionnalisées sont précipitées dans l'acétone puis soumises à différentes étapes de lavage (3*30 mL d'acétone, 3*30 mL d'éthanol et 3*30 mL d'eau).
Ces étapes de lavage permettent d'éliminer les traces de polymères susceptibles de ne pas s'être greffés sur les particules.
Les particules sont ensuite placées une nuit à l'étuve à 65°C.
Une préparation similaire peut être envisagée aisément avec les polymères préparés aux exemples 4 et 6.

EXEMPLE 8

Dans cet exemple, les particules obtenues à l'exemple 7 sont incorporées dans des électrodes et soumises à des tests en pile (dite Pile 1) à des visées comparatives par rapport à une pile similaire mais comportant une électrode comprenant des particules de platine supportées sur du carbone dispersées dans du Nafion® (dite Pile 2) et une pile similaire comportant une électrode comportant des particules greffées par des greffons de formule (I') suivante :

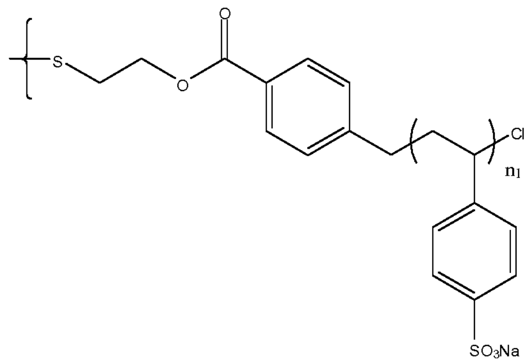

avec $n_1$ indiquant le nombre de répétition du motif pris entre parenthèses, dite Pile 3.
Pour ce faire, chaque pile comporte un assemblage électrode-membrane-électrode comprenant :

- une anode du type électrode à diffusion de gaz comprenant 0,2 mg/cm$^2$ de particules commerciales de platine liées à un matériau carboné (ces particules étant non greffées) ;
- une cathode du type électrode à diffusion de gaz comprenant 0,4 mg/cm$^2$ de particules de platine spécifiques;
- une membrane en Nafion® NRE 211 disposée entre l'anode et la cathode.

Pour la Pile 1, la cathode comprend des particules de platine obtenues à l'exemple 7.
Pour la Pile 2, la cathode comprend des particules de platine supportées sur du carbone dispersées dans du Nafion®.
Pour la Pile 3, la cathode comprend des particules de platine supportées sur du carbone greffées par des greffons de formule (I') ci-dessus.
Les assemblages électrode-membrane-électrode sont réalisés selon le protocole opératoire suivant.
Que ce soient pour l'anode ou pour la cathode, celles-ci sont préparées par simple coulée d'une encre catalytique comprenant les particules de platine concernées dans un mélange éthanol/eau (3 :1) sur un tissu à diffusion de gaz (GDL) en Sigracet ® 24BC.
Avant d'être placée dans l'assemblage, la membrane en Nafion® est traitée préalablement par pressage à chaud en venant presser un renfort de part à d'autre de celle-ci à une température de 110°C et à une pression de 3 MPa pendant 90 secondes.
Enfin, les électrodes à diffusion de gaz (anode et cathode) sont pressées de part et d'autre de la membrane en Nafion® ainsi traitée préalablement à une température de 115°C puis à une pression de 3,5 MPa pendant 150 secondes à une température de 135°C.
Les tests sont réalisés en monocellule de 5 cm$^2$ sous $H_2/O_2$ (stoechiométrie $\lambda_{O2}$=1,5 et $\lambda_{H2}$=1,5) sous une pression de 2 bars, à 60°C et à 21% d'humidité.
Des courbes d'évolution de la tension E (en V) en fonction de la densité de courant (en A/cm$^2$) sont reportées sur la figure 2 (courbe a' pour la Pile 1, courbe b' pour la Pile 2 et courbe c' pour la Pile 3).

La courbe b' représente le comportement d'une électrode classique constituée de nanoparticules de platine supportées sur carbone et dispersées dans du Nafion®. Aux fortes densités de courant, on observe une inflexion de la courbe caractéristique d'un début de noyage des électrodes.

La courbe c' représente le comportement d'une électrode constituée de nanoparticules de platine supportées sur carbone et greffées par des greffons de formule (I'). Aux fortes densités de courant, on observe également une légère inflexion de la courbe.

La courbe a' représente le comportement d'une électrode conforme à l'invention. Aux fortes densités de courant, on n'observe plus d'inflexion de la courbe, ce qui traduit une absence de noyage des électrodes.

Il a été également testé la durabilité de telles piles, ce test consistant à suivre l'évolution en fonction du temps de la tension de cellule à densité de courant fixe (1 A.$cm^{-2}$).

Les essais ont été menés à 36°C, qui représente la température d'équilibre d'une pile non chauffée.

Les résultats sont reportés sur la figure 3, avec la courbe a' pour la Pile 1, la courbe b' pour la Pile 2 et la courbe c' pour la Pile 3.

La pile selon l'invention présente un plus faible déclin, qui traduit une plus faible sensibilité au vieillissement. Ce phénomène s'explique par une meilleure stabilité chimique des particules de l'invention dans le milieu corrosif de la pile.

## Revendications

1. Procédé de préparation de particules comprenant un matériau apte à catalyser la réduction de l'oxygène ou l'oxydation de l'hydrogène, lesdites particules étant greffées par des greffons consistant en au moins un polymère comprenant au moins un motif répétitif styrénique porteur d'au moins un groupe conducteur de protons, éventuellement sous forme d'un sel, ledit procédé comprenant :

   a) une étape de préparation d'au moins un polymère par polymérisation ATRP :

   - d'un monomère styrénique fluoré éventuellement porteur d'au moins un groupe conducteur de protons, éventuellement sous forme d'un sel ; et
   - éventuellement, d'un monomère styrénique non fluoré porteur d'au moins un groupe conducteur de protons, éventuellement sous forme d'un sel ;

   avec un amorceur ATRP répondant à la formule (I) suivante :

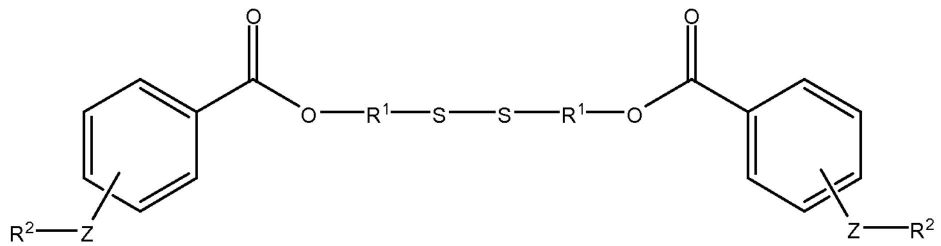

(I)

   dans laquelle :

   - les groupes $R^1$ représentent, indépendamment l'un de l'autre, un groupe espaceur organique ;
   - les groupes Z représentent, indépendamment l'un de l'autre, une liaison simple ou un groupe espaceur organique ;
   - les groupes $R^2$ représentent, indépendamment l'un de l'autre, un atome d'halogène ;

   le polymère résultant répondant à la formule (II) suivante :

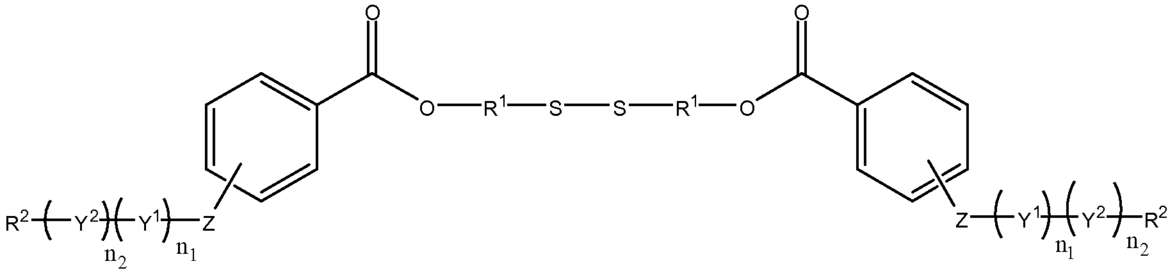

(II)

dans laquelle :

- $Y^1$ correspond au motif répétitif issu de la polymérisation du monomère styrénique fluoré éventuellement porteur d'au moins un groupe conducteur de protons, éventuellement sous forme d'un sel et $n_1$ correspond au nombre de répétition du motif répétitif pris entre parenthèses, ce nombre de répétition étant un entier positif au moins égal à 2 ;
- $Y^2$ correspond au motif répétitif issu de la polymérisation du monomère styrénique non fluoré porteur d'au moins un groupe conducteur de protons, éventuellement sous forme d'un sel, et $n_2$ correspond au nombre de répétition du motif répétitif pris entre parenthèses, ce nombre de répétition étant égal à 0 ou étant un entier positif au moins égal à 2 ;
- $R^1$, $R^2$ et Z étant tels que définis ci-dessus ;

b) lorsque le motif répétitif issu de la polymérisation du monomère styrénique fluoré n'est pas porteur d'au moins un groupe conducteur de protons, éventuellement sous forme d'un sel, une étape d'introduction sur ce motif répétitif d'au moins un groupe conducteur de protons, éventuellement sous forme d'un sel, le motif répétitif $Y^1$ correspondant ainsi désormais à un motif répétitif styrénique fluoré porteur d'au moins un groupe conducteur de protons, éventuellement sous forme d'un sel ;

c) une étape de mise en contact de particules comprenant un matériau apte à catalyser la réduction de l'oxygène ou l'oxydation de l'hydrogène avec le polymère obtenu en a) ou, le cas échéant, en b), moyennant quoi l'on obtient des particules greffées par des greffons de formule (III) suivante :

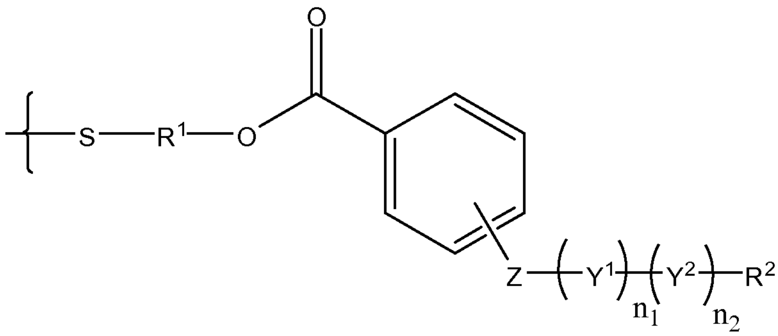

(III)

l'accolade indiquant l'endroit par lequel les greffons sont liés, de manière covalente, aux particules et les $R^1$, $R^2$, Z, $Y^2$, $n_1$ et $n_2$ étant tels que définis ci-dessus et $Y^1$ constitue un motif répétitif styrénique fluoré porteur d'au moins un groupe conducteur de protons, éventuellement sous forme d'un sel.

**2.** Procédé selon la revendication 1, dans lequel les particules sont des particules métalliques.

**3.** Procédé selon la revendication 1 ou 2, dans lequel les particules métalliques sont des particules comprenant un métal noble, tel que le platine, le ruthénium, le palladium et des mélanges de ceux-ci.

**4.** Procédé selon l'une quelconque des revendications précédentes, dans lequel les groupes $R^1$ et les groupes Z représentent, indépendamment l'un de l'autre, un groupe alkylène.

5. Procédé selon l'une quelconque des revendications précédentes, dans lequel, pour l'amorceur ATRP, les groupes $-Z-R^2$ sont situés en position *para* par rapport aux groupes -COO-.

6. Procédé selon l'une quelconque des revendications précédentes, dans lequel le groupe conducteur de protons est un groupe acide sulfonique $-SO_3H$, un groupe acide carboxylique $-CO_2H$ ou un groupe acide phosphonique $-PO_3H_2$, ces groupes pouvant être présents éventuellement sous forme d'un sel.

7. Procédé selon l'une quelconque des revendications précédentes, dans lequel le monomère styrénique fluoré est un monomère répondant à la formule (V) suivante :

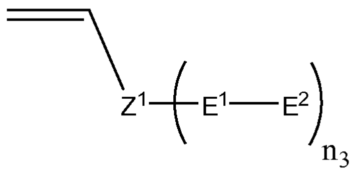

(V)

- $Z^1$ correspond à un groupe phénylène fluoré; et
- $E^1$ correspond à une liaison simple ou un groupe espaceur organique ;
- $E^2$ correspond à un groupe conducteur de protons, éventuellement sous forme d'un sel, tel qu'un groupe acide sulfonique, un groupe acide phosphonique ou un groupe acide carboxylique ;
- $n_3$ est égal à 0 ou à 1.

8. Procédé selon la revendication 7, dans lequel, lorsque $E^1$ est un groupe espaceur organique, $E^1$ est un groupe alkylène, un groupe -S-alkylène- ou un groupe -O-alkylène, lesdits groupes alkylènes pouvant comporter de 1 à 4 atomes de carbone.

9. Procédé selon l'une quelconque des revendications précédentes, dans lequel le monomère styrénique non fluoré est un monomère de formule (XII) suivante :

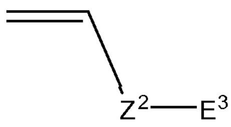

(XII)

dans laquelle :

- $Z^2$ correspond à un groupe phénylène ; et
- $E^3$ correspond à un groupe conducteur de protons, éventuellement sous forme d'un sel.

10. Procédé selon l'une quelconque des revendications précédentes, dans lequel les particules sont, en outre, liées à un matériau carboné.

11. Procédé selon la revendication 10, comprenant, en outre, avant l'étape a) et/ou b) et/ou c), une étape de préparation de particules comprenant un matériau apte à catalyser la réduction de l'oxygène ou l'oxydation de l'hydrogène.

12. Particules susceptibles d'être obtenues par un procédé selon l'une quelconque des revendications 1 à 11, lesdites particules comprenant un matériau apte à catalyser la réduction de l'oxygène ou l'oxydation de l'hydrogène et étant greffées par des greffons de formule (III) suivante :

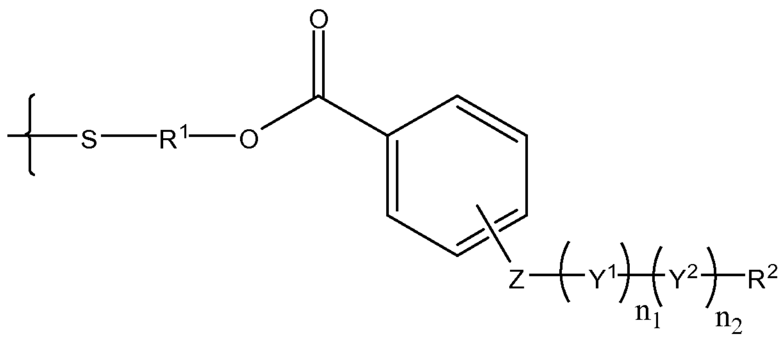

(III)

l'accolade indiquant l'endroit par lequel les greffons sont liés, de manière covalente, aux particules et les $R^1$, $R^2$, Z, $Y^2$, $n_1$ et $n_2$ étant tels que à la revendication 1 et $Y^1$ est un motif répétitif styrénique fluoré porteur d'au moins un groupe conducteur de protons, éventuellement sous forme d'un sel, le groupe $-Z-(Y^1)_{n1}-(Y^2)_{n2}-R^2$, qui entrecoupe une liaison carbone-carbone du groupe phényle, signifiant qu'il peut être lié à l'un quelconque des atomes de carbone du groupe phényle.

**13.** Electrode comprenant des particules telles que définies selon la revendication 12.

**14.** Pile à combustible comprenant au moins un assemblage électrode-membrane-électrode, dans lequel au moins une de ses électrodes est une électrode telle que définie à la revendication 13.

**15.** Polymère répondant à la formule (II) suivante :

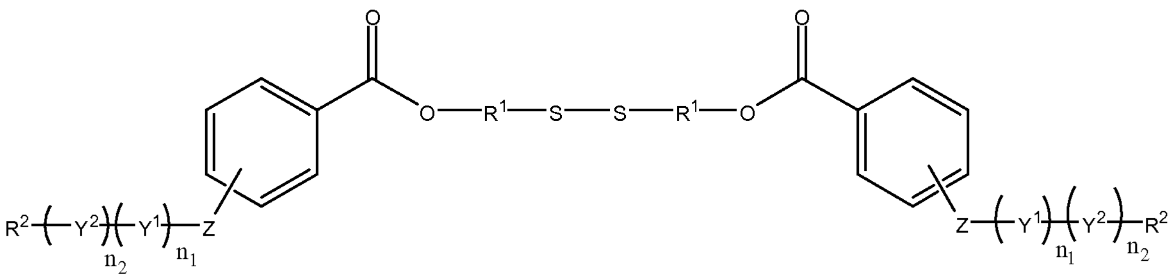

(II)

dans laquelle :

- $Y^1$ correspond au motif répétitif issu de la polymérisation d'un monomère styrénique fluoré, éventuellement porteur d'au moins un groupe conducteur de protons, éventuellement sous forme d'un sel et $n_1$ au nombre de répétition du motif répétitif pris entre parenthèses, ce nombre de répétition étant un entier positif au moins égal à 2 ;
- $Y^2$ correspond au motif répétitif issu de la polymérisation d'un monomère styrénique non fluoré porteur d'au moins un groupe conducteur de protons, éventuellement sous forme d'un sel, et $n_2$ au nombre de répétition du motif répétitif pris entre parenthèses, ce nombre de répétition étant égal à 0 ou étant un entier positif au moins égal à 2 ;
- $R^1$, $R^2$ et Z étant tels que définis à la revendication 1.

**Patentansprüche**

**1.** Verfahren zur Herstellung von Partikeln, die ein Material umfassen, das dazu ausgelegt ist, die Reduktion von Sauerstoff oder die Oxidation von Wasserstoff zu katalysieren, wobei die Partikel mit Pfröpflingen gepfropft sind, die aus wenigstens einem Polymer bestehen, das wenigstens ein sich wiederholendes Styrolmotiv umfasst, das Träger wenigstens einer protonenleitenden Gruppe ist, gegebenenfalls in Form eine Salzes, wobei das Verfahren

Folgendes umfasst:

a) einen Schritt der Herstellung wenigstens eines Polymers durch ATRP-Polymerisation;

- eines fluorierten Styrolmonomers, das gegebenenfalls Träger wenigstens einer protonenleitenden Gruppe ist, gegebenfalls in Form eines Salzes; und
- gegebenenfalls eines nicht fluorierten Styrolmonomers, das Träger wenigstens einer protonenleitenden Gruppe ist, gegebenenfalls in Form eine Salzes;

mit einem ATRP-Initiator, der der nachfolgenden Formel (I) genügt:

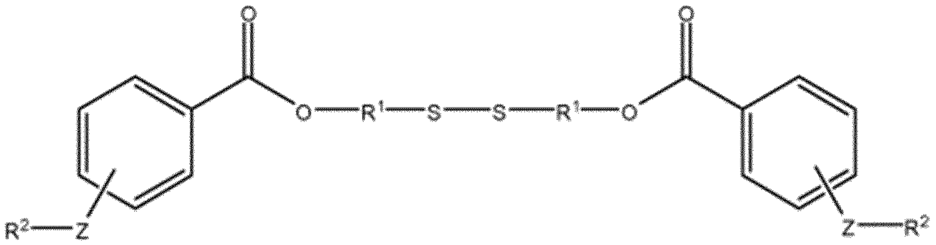

(I)

wobei:

- die Gruppen $R^1$ unabhängig voneinander eine organische Abstandhaltergruppe repräsentieren;
- die Gruppen Z unabhängig voneinander eine Einfachbindung oder eine organische Abstandhaltergruppe repräsentieren;
- die Gruppen $R^2$ unabhängig voneinander ein Halogenatom repräsentieren;

wobei das resultierende Polymer der nachfolgenden Formel (II) genügt:

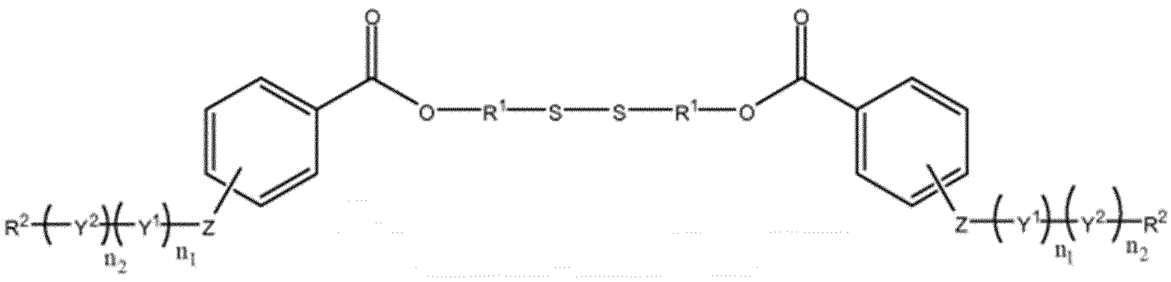

(II)

wobei:

- $Y^1$ dem sich wiederholenden Motiv entspricht, das aus der Polymerisation des fluorierten Styrolmonomers stammt, das gegebenenfalls Träger wenigstens einer protonenleitenden Gruppe ist, gegebenenfalls in Form eines Salzes, und $n_1$ der Wiederholungszahl des zwischen Klammern gesetzten sich wiederholenden Motivs entspricht, wobei diese Wiederholungszahl eine positive ganze Zahl wenigstens gleich 2 ist;
- $Y^2$ dem sich wiederholenden Motiv entspricht, das aus der Polymerisation des nicht fluorierten Styrolmonomers stammt, das Träger wenigstens einer protonenleitenden Gruppe ist, gegebenenfalls in Form eines Salzes, und $n_2$ der Wiederholungszahl des zwischen Klammern gesetzten sich wiederholenden Motivs entspricht, wobei diese Wiederholungszahl gleich 0 ist oder eine positive ganze Zahl wenigstens gleich 2 ist;
- $R^1$, $R^2$ und Z wie oben definiert sind;

b) wenn das sich wiederholende Motiv, das aus der Polymerisation des fluorierten Styrolmonomers stammt, nicht Träger wenigstens einer protonenleitenden Gruppe ist, gegebenenfalls in Form eines Salzes, einen Schritt des Einbringens, in dieses sich wiederholende Motiv, von wenigstens einer protonenleitenden Gruppe, gegebenenfalls in Form eines Salzes, wobei das sich wiederholende Motiv $Y^1$ somit dann einem sich wiederholenden fluorierten Styrolmotiv entspricht, das Träger wenigstens einer protonenleitenden Gruppe ist, gegebenenfalls in Form eines Salzes;

c) einen Schritt des Inkontaktbringens von Partikeln, die ein Material umfassen, das dazu ausgelegt ist, die Reduktion von Sauerstoff oder die Oxidation von Wasserstoff zu katalysieren, mit dem in a) oder gegebenenfalls in b) erhaltenen Polymer, wodurch man durch Pfröpflinge gepfropfte Partikel der nachfolgenden Formel (III) erhält:

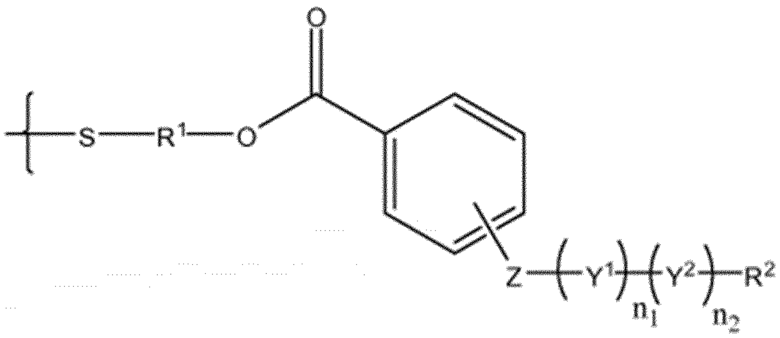

(III)

wobei die geschweifte Klammer den Ort angibt, an dem die Pfröpflinge in kovalenter Weise an die Partikel gebunden sind, und die $R^1$, $R^2$, Z, $Y^2$, $n_1$ und $n_2$ wie oben definiert sind, und $Y^1$ ein sich wiederholendes fluoriertes Styrolmotiv darstellt, das Träger wenigstens einer protonenleitenden Gruppe ist, gegebenenfalls in Form eines Salzes.

**2.** Verfahren nach Anspruch 1, bei dem die Partikel Metallpartikel sind.

**3.** Verfahren nach Anspruch 1 oder 2, bei dem die Metallpartikel Partikel sind, die ein Edelmetall umfassen, beispielsweise Platin, Ruthenium, Palladium und deren Mischungen.

**4.** Verfahren nach einem der vorhergehenden Ansprüche, bei dem die Gruppen $R^1$ und die Gruppen Z unabhängig voneinander eine Alkylengruppe repräsentieren.

**5.** Verfahren nach einem der vorhergehenen Ansprüche, bei dem für den ATRP-Initiator die Gruppen -Z-$R^2$ bezogen auf die Gruppen -COO- an einer Paraposition angeordnet sind.

**6.** Verfahren nach einem der vorhergehenden Ansprüche, bei dem die protonenleitende Gruppe eine Sulfonsäuregruppe -$SO_3H$, eine Carbonsäuregruppe -$CO_2H$ oder eine Phosphonsäuregruppe -$PO_3H_2$ ist, wobei diese Gruppen gegebenenfalls in Form eines Salzes vorhanden sein können.

**7.** Verfahren nach einem der vorhergehenden Ansprüche, bei dem das fluorierte Styrolmonomer ein Monomer ist, das der nachfolgenden Formel (V) genügt:

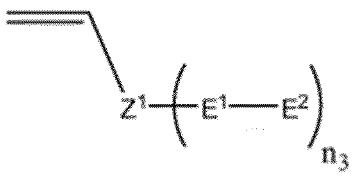

(V)

- wobei $Z^1$ einer fluorierten Phenylengruppe entspricht; und
- wobei $E^1$ einer Einfachbindung oder einer organischen Abstandhaltergruppe entspricht;
- wobei $E^2$ einer protonenleitenden Gruppe entspricht, gegebenenfalls in Form eines Salzes, beispielsweise einer Sulfonsäuregruppe, einer Phosphonsäuregruppe oder einer Carbonsäuregruppe;

- wobei $n_3$ gleich 0 oder gleich 1 ist.

8. Verfahren nach Anspruch 7, bei dem dann, wenn $E^1$ eine organische Abstandhaltergruppe ist, $E^1$ eine Alkylengruppe, eine Gruppe -S-Alkylen- oder eine Gruppe -O-Alkylen ist, wobei die Alkylengruppen 1 bis 4 Kohlenstoffatome umfassen können.

9. Verfahren nach einem der vorhergehenden Ansprüche, bei dem das nicht fluorierte Styrolmonomer ein Monomer der nachfolgenden Formel (XII) ist:

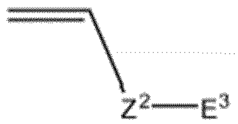

(XII)

wobei:

- $Z^2$ einer Phenylengruppe entspricht; und
- $E^3$ einer protonenleitenden Gruppe entspricht, gegebenenfalls in Form eines Salzes.

10. Verfahren nach einem der vorhergehenden Ansprüche, bei dem die Partikel ferner an ein Kohlenstoffmaterial gebunden sind.

11. Verfahren nach Anspruch 10, ferner umfassend vor dem Schritt a) und/oder b) und/oder c) einen Schritt der Herstellung von Partikeln, die ein Material umfassen, das dazu ausgelegt ist, die Reduktion von Sauerstoff oder die Oxidation von Wasserstoff zu katalysieren.

12. Partikel, die durch ein Verfahren nach einem der Ansprüche 1 bis 11 erhältlich sind, wobei die Partikel ein Material umfassen, das dazu ausgelegt ist, die Reduktion von Sauerstoff oder die Oxidation von Wasserstoff zu katalysieren und durch Pfröpflinge der nachfolgenden Formel (III) gepfropft sind:

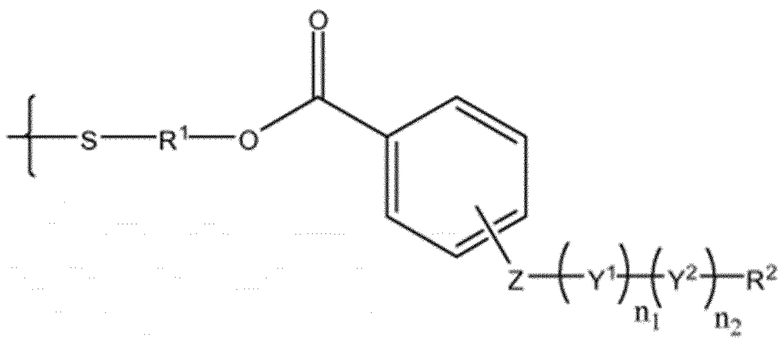

(III)

wobei die geschweifte Klammer den Ort angibt, an dem die Pfröpflinge in kovalenter Weise an die Partikel gebunden sind, und die $R^1$, $R^2$, Z, $Y^2$, $n_1$ und $n_2$ wie in Anspruch 1 sind, und $Y^1$ ein sich wiederholendes fluoriertes Styrolmotiv ist, das Träger wenigstens einer protonenleitenden Gruppe ist, gegebenenfalls in Form eines Salzes, wobei die Gruppe $-Z-(Y^1)_{n1}-(Y^2)_{n2}-R^2$ eine Kohlenstoff-Kohlenstoff-Bindung der Phenylgruppe unterbricht, was bedeutet, dass sie an ein beliebiges der Kohlenstoffatome der Phenylgruppe gebunden sein kann.

13. Elektrode, umfassend Partikel wie in Anspruch 12 definiert.

14. Brennstoffzelle, umfassend wenigstens eine Anordnung Elektrode-Membran-Elektrode, bei der wenigstens eine ihrer Elektroden eine Elektrode wie in Anspruch 13 definiert ist.

15. Polymer, das der nachfolgenden Formel (II) genügt:

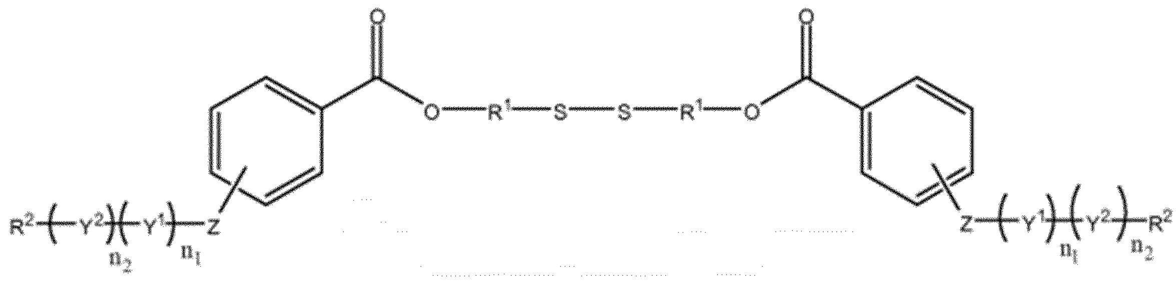

(II)

wobei:

- $Y^1$ dem sich wiederholenden Motiv entspricht, das aus der Polymerisation eines fluorierten Styrolmonomers stammt, das gegebenenfalls Träger wenigstens einer protonenleitenden Gruppe ist, gegebenenfalls in Form eines Salzes, und $n_1$ der Wiederholungszahl des zwischen Klammern gesetzten sich wiederholenden Motivs, wobei diese Wiederholungszahl eine positive ganze Zahl wenigstens gleich 2 ist;
- $Y^2$ dem sich wiederholenden Motiv entspricht, das aus der Polymerisation eines nicht fluorierten Styrolmonomers stammt, das Träger wenigstens einer protonenleitenden Gruppe ist, gegebenenfalls in Form eines Salzes, und $n_2$ der Wiederholungszahl des zwischen Klammern gesetzten sich wiederholenden Motivs, wobei diese Wiederholungszahl gleich 0 ist oder eine positive ganze Zahl wenigstens gleich 2 ist;
- $R^1$, $R^2$ und Z wie in Anspruch 1 definiert sind.

**Claims**

**1.** A particle preparation method for preparing particles comprising of a material that is suitable for catalysing oxygen reduction or hydrogen oxidation, the said particles being grafted by grafts consisting of at least one polymer comprising at least one styrene repeating unit that bears at least one proton-conducting group, optionally in the form of a salt, the said method including :

a) a polymer preparation step for preparing at least one polymer by atom transfer radical polymerisation (ATRP) :

- of a fluorinated styrenic monomer optionally bearing at least one proton-conducting group, optionally in the form of a salt ; and
- optionally, of a non-fluorinated styrenic monomer bearing at least one proton-conducting group, optionally in the form of a salt ;

with an ATRP initiator corresponding to the following formula (I) :

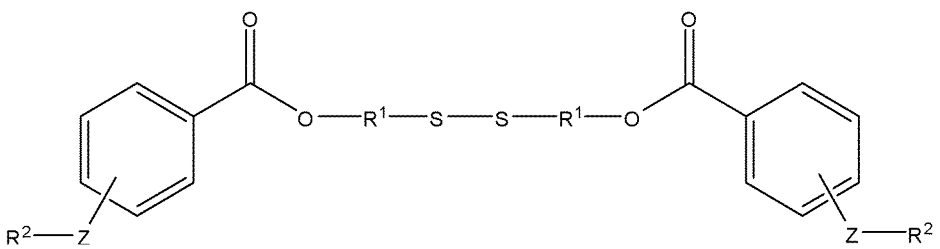

(I)

in which :

- the groups $R^1$ represent, independently of one another, an organic spacer group;
- the groups Z represent, independently of one another, a single bond or an organic spacer group ;
- the groups $R^2$ represent, independently of one another, a halogen atom ;

the resulting polymer corresponding to the following formula (II) :

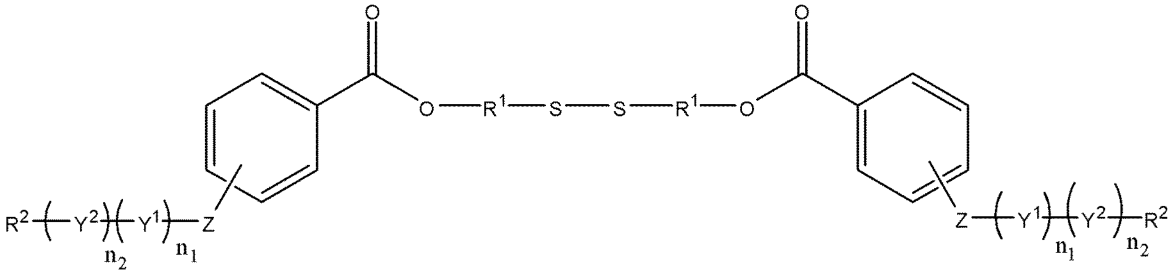

(II)

in which :

- $Y^1$ corresponds to the repeating unit resulting from the polymerisation of the fluorinated styrenic monomer optionally bearing at least one proton-conducting group, optionally in the form of a salt, and $n_1$ corresponds to the number of repetitions of the repeating unit placed within parentheses, this number of repetitions being a positive integer that is at least equal to 2 ;
- $Y^2$ corresponds to the repeating unit resulting from the polymerisation of the non-fluorinated styrenic monomer bearing at least one proton-conducting group, optionally in the form of a salt, and $n_2$ corresponds to the number of repetitions of the repeating unit placed within parentheses, this number of repetitions being equal to 0 or being a positive integer that is at least equal to 2 ;
- $R^1$, $R^2$ and Z being as defined here above ;

b) when the repeating unit resulting from the polymerisation of the fluorinated styrenic monomer does not bear at least one proton-conducting group, optionally in the form of a salt, an introduction step for introducing on to this repeating unit at least one proton-conducting group, optionally in the form of a salt, the repeating unit $Y^1$ thus corresponding henceforth to a fluorinated styrene repeating unit bearing at least one proton-conducting group, optionally in the form of a salt;
c) a contacting step of placing in contact the particles comprising of a material that is suitable for catalysing oxygen reduction or hydrogen oxidation with the polymer obtained in a) or, as the case may be, in b), by which means the grafted particles are obtained by grafts having the following formula (III) :

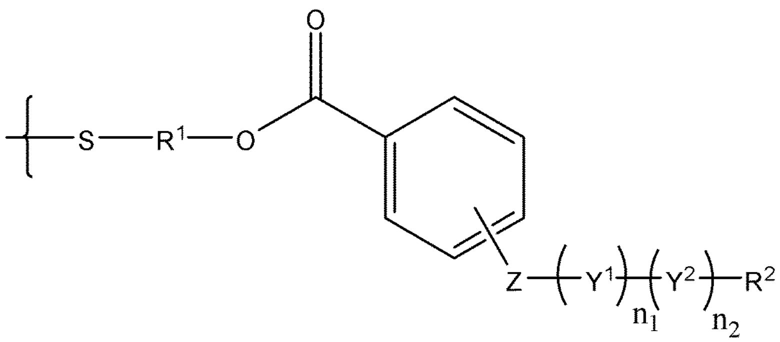

(III)

the curly bracket indicating the location at which the grafts are bound in a covalent manner, to the particles, and the $R^1$, $R^2$, Z, $Y^2$, $n_1$ and $n_2$ being as defined here above and $Y^1$ constitutes a fluorinated styrene repeating unit bearing at least one proton-conducting group, optionally in the form of a salt.

2. A method according to claim 1, in which the particles are metal particles.

3. A method according to claim 1 or claim 2, in which the metal particles are particles comprising a noble metal, such as platinum, ruthenium, palladium and mixtures thereof.

4. A method according to any one of the preceding claims in which the groups $R^1$ and the groups Z represent, independently of one another, an alkylene group.

5. A method according to any one of the preceding claims, in which for the ATRP initiator, the groups $-Z-R^2$ are located in the *para-* position relative to the groups -COO-.

6. A method according to any one of the preceding claims, in which the proton-conducting group is a sulphonic acid group $-SO_3H$, a carboxylic acid group $-CO_2H$, or a phosphonic acid group $-PO_3H_2$, with these groups optionally being present in the form of a salt.

7. A method according to any one of the preceding claims, in which the fluorinated styrenic monomer is a monomer corresponding to the following formula (V) :

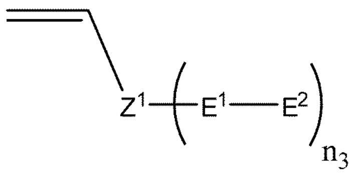

(V)

- $Z^1$ corresponds to a fluorinated phenylene group ; and
- $E^1$ corresponds to a single bond or an organic spacer group ;
- $E^2$ corresponds to a proton-conducting group, optionally in the form of a salt, such as a sulfonic acid group, a phosphonic acid group or a carboxylic acid group ;
- $n_3$ is equal to 0 or 1.

8. A method according to claim 7, in which, when $E^1$ is an organic spacer group, $E^1$ is an alkylene group, an -S-alkylene group or an -O-alkylene group, with the said alkylene groups possibly containing from 1 to 4 carbon atoms.

9. A method according to any one of the preceding claims, in which the non-fluorinated styrenic monomer is a monomer having the following formula (XII) :

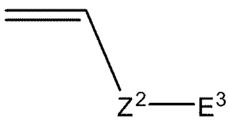

(XII)

wherein :

- $Z^2$ corresponds to a phenylene group ; and
- $E^3$ corresponds to a proton-conducting group, optionally in the form of a salt.

10. A method according to any one of the preceding claims, in which the particles are in addition, bound to a carbonaceous material.

11. A method according to claim 10, in addition including, prior to the step a) and / or b) and / or c), a particle preparation step of preparing particles comprising of a material that is suitable for catalysing oxygen reduction or hydrogen oxidation.

12. Particles that may be obtained by means of a method according to any one of claims 1 to 11, the said particles comprising of a material that is suitable for catalysing oxygen reduction or hydrogen oxidation and being grafted by grafts having the following formula (III) :

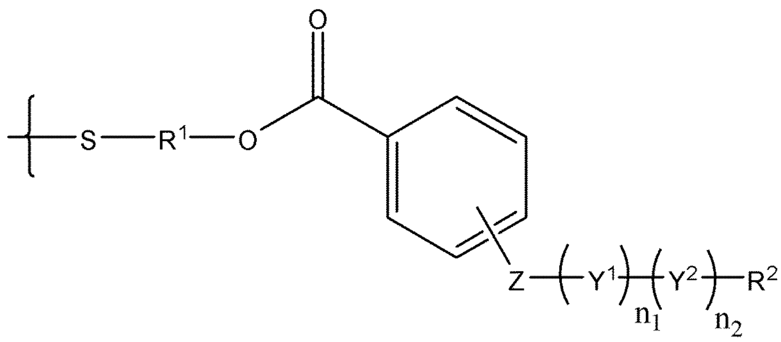

(III)

the curly bracket indicating the location at which the grafts are bound in a covalent manner, to the particles, and the $R^1$, $R^2$, Z, $Y^2$, $n_1$ and $n_2$ being such as defined in claim 1 and $Y^1$ is a fluorinated styrene repeating unit bearing at least one proton-conducting group, optionally in the form of a salt, the group $-Z-(V^1)_{n1}-(V^2)_{n2}-R^2$, which intersects a carbon-carbon bond of the phenyl group, signifying that it can be bound to any one of the carbon atoms of the phenyl group.

**13.** An electrode comprising particles as defined according to claim 12.

**14.** A fuel cell comprising at least one electrode-membrane-electrode assembly, in which at least one of the electrodes thereof is an electrode as defined in claim 13.

**15.** A polymer corresponding to the following formula (II) :

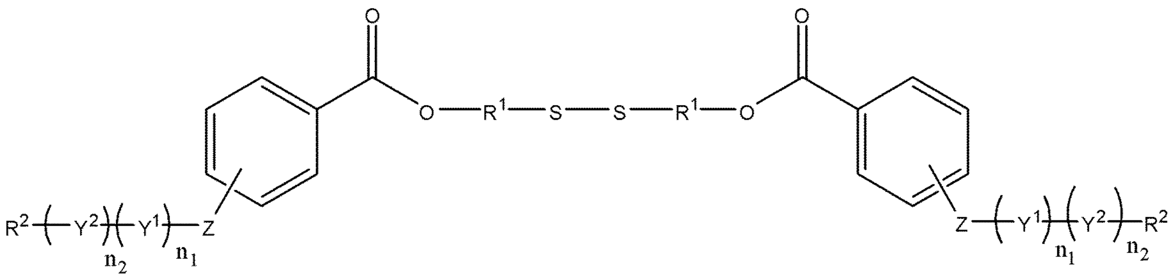

(II)

in which :

- $Y^1$ corresponds to the repeating unit resulting from the polymerisation of the fluorinated styrenic monomer, optionally bearing at least one proton-conducting group, optionally in the form of a salt, and $n_1$ corresponds to the number of repetitions of the repeating unit placed within parentheses, this number of repetitions being a positive integer that is at least equal to 2 ;
- $Y^2$ corresponds to the repeating unit resulting from the polymerisation of the non-fluorinated styrenic monomer bearing at least one proton-conducting group, optionally in the form of a salt, and $n_2$ corresponds to the number of repetitions of the repeating unit placed within parentheses, this number of repetitions being equal to 0 or being a positive integer that is at least equal to 2 ;
- $R^1$, $R^2$ and Z being as defined in claim 1.

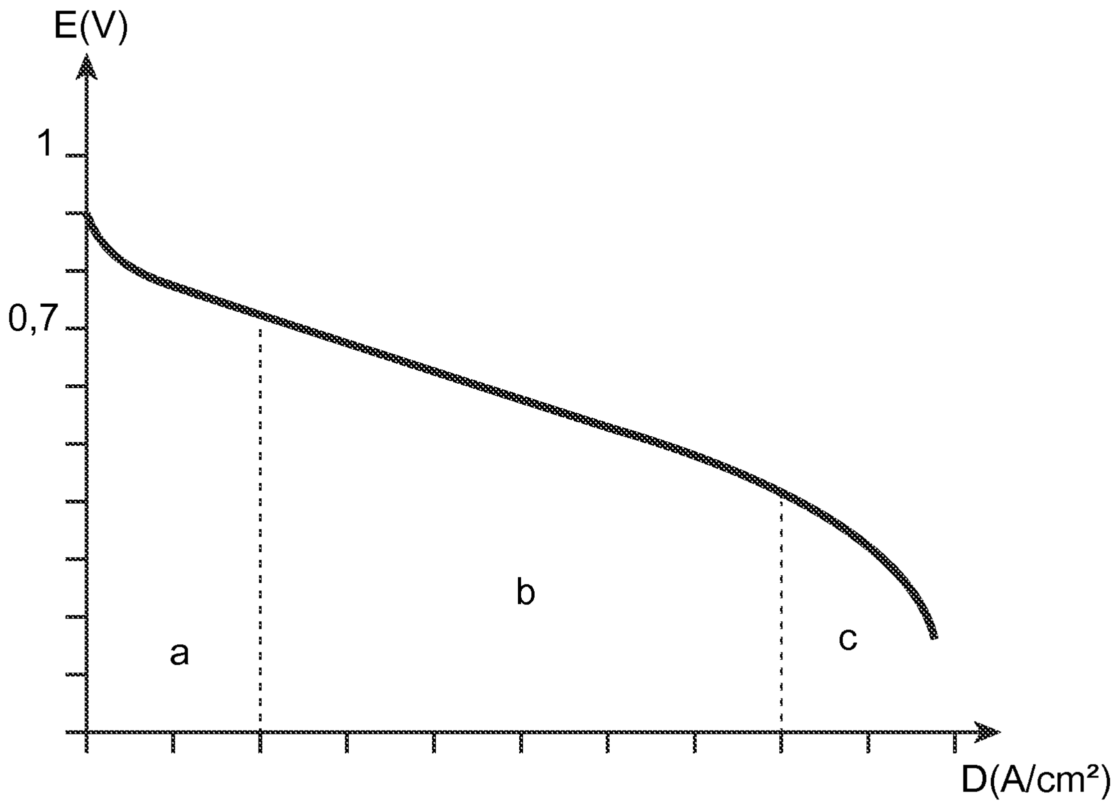


FIG. 1

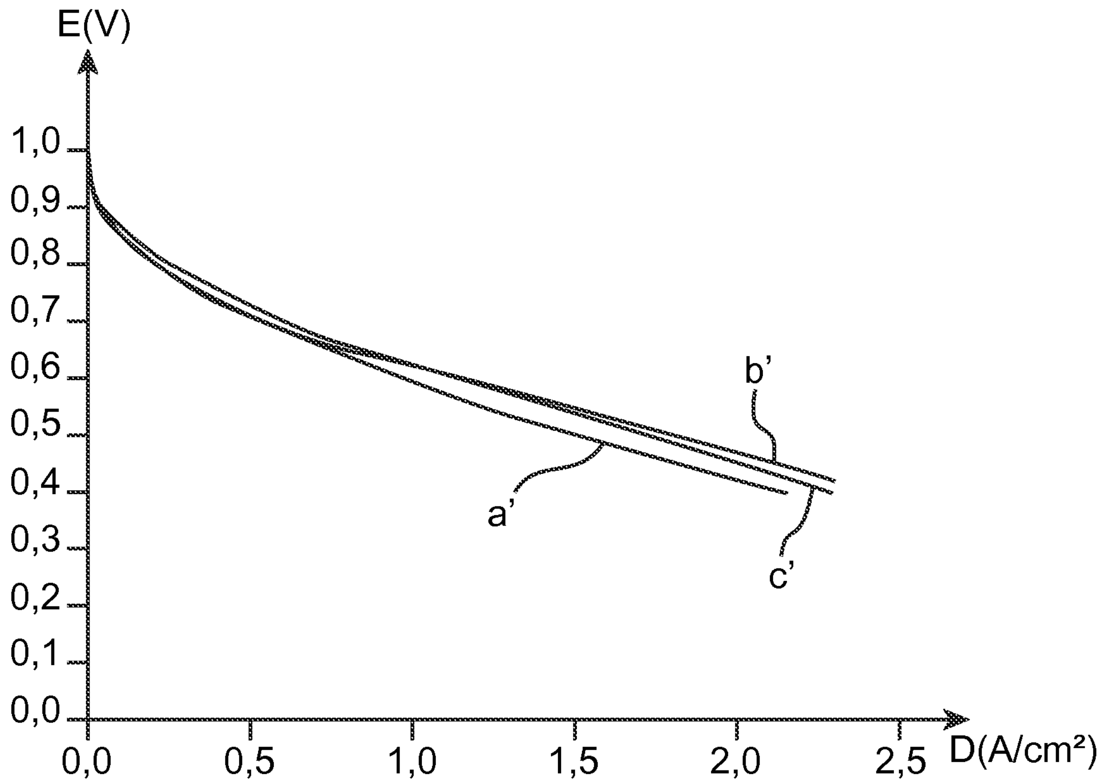
E(V)
1,0
0,9
0,8
0,7
0,6
0,5
0,4
0,3
0,2
0,1
0,0
0,0
0,5
1,0
1,5
2,0
2,5
D(A/cm²)
a'
b'
c'

FIG. 2

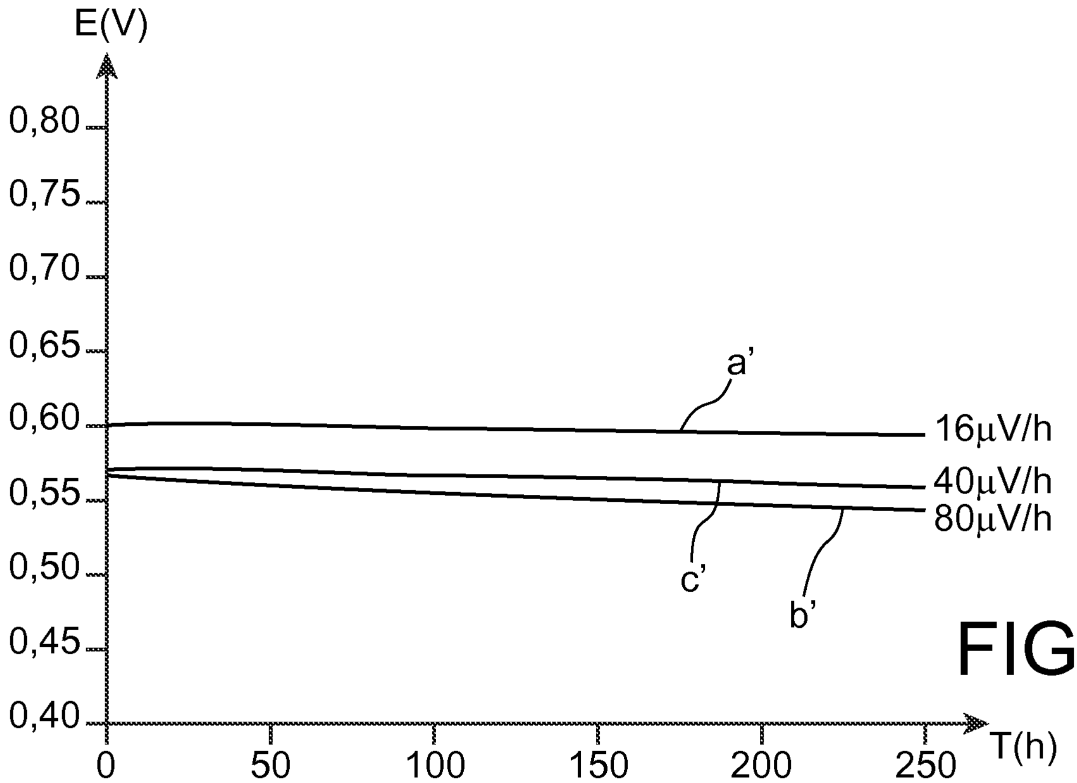
E(V)
0,80
0,75
0,70
0,65
0,60
0,55
0,50
0,45
0,40
0
50
100
150
200
250
T(h)
a'
16µV/h
40µV/h
80µV/h
c'
b'

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2982264
- FR 2982173


### Littérature non-brevet citée dans la description


- *Langmuir,* vol. 28 (51), 17832-17840
- *Chemistry of Materials,* vol. 25 (19), 3797-3807